# EUROPÄISCHE PATENTSCHRIFT

(11) **EP 2 263 070 B1**
(45) Veröffentlichungstag und Bekanntmachung des Hinweises auf die Patenterteilung: **29.11.2017**
(21) Anmeldenummer: 09715725.9
(22) Anmeldetag: 27.02.2009
(51) Int. Cl.: G01Q 30/02, G01B 11/24, G02B 21/00

(54) **SYNCHRONISIERTE BILDGEBUNG MITTELS OPTISCHER VERFAHREN UND RASTERKRAFTMIKROSKOPIE**
SYNCHRONIZED IMAGING BY WAY OF AN OPTICAL METHOD AND ATOMIC FORCE MICROSCOPY
FORMATION D'IMAGE SYNCHRONISÉE AU MOYEN D'UN PROCÉDÉ OPTIQUE ET DE MICROSCOPIE À FORCE ATOMIQUE

(30) Priorität: 29.02.2008 DE 102008011993
(43) Veröffentlichungstag der Anmeldung: 22.12.2010
(73) Patentinhaber: Leica Microsystems CMS GmbH, 35578 Wetzlar (DE)
(72) Erfinder: KNEBEL, Werner, 76709 Kronau (DE); WIDZGOWSKI, Bernd, 69221 Dossenheim (DE)
(74) Vertreter: Schaumburg und Partner Patentanwälte mbB
(86) Internationale Anmeldenummer: PCT/EP2009/052348
(87) Internationale Veröffentlichungsnummer: WO 2009/106602

(56) Entgegenhaltungen:
- EP-A- 1 179 748
- WO-A-96/30927
- WO-A-2007/076828
- "diBioscope II"[Online] 2007, XP002530928 Veeco Instruments Inc. Gefunden im Internet: URL:http://veeco.com/pdfs/datasheets/b59_r eva2_bioscope_ii_datasheet_final.pdf> [gefunden am 2009-06-04] in der Anmeldung erwähnt
- ANDRÉ E.X. BROWN ET AL: "Combined Fluorescence and Atomic Force Microscopy for Cytoskeleton Morphology"[Online] 2007, XP002530929 Veeco Instruments, Inc. Gefunden im Internet: URL:http://veeco.com/pdfs/appnotes/AN98-Co mbined%20Fluorescence_321.pdf> [gefunden am 2009-06-04] in der Anmeldung erwähnt

## Beschreibung

### Gebiet der Erfindung

Die Erfindung betrifft ein Verfahren und eine Vorrichtung zur Abbildung mindestens einer Probe. Derartige Verfahren und Vorrichtungen werden beispielsweise in der Medizin und Biologie zur Untersuchung biologischer Strukturen eingesetzt. Auf diese Weise lassen sich beispielsweise biologische Vorgänge untersuchen, oder es lassen sich anhand der gewonnenen Informationen Krankheitsbilder erkennen. Weiterhin können die vorgeschlagenen Verfahren und Vorrichtungen auch in anderen Bereichen der Naturwissenschaften und Technik zum Einsatz kommen, beispielsweise in der Materialforschung oder für Werkstückuntersuchungen.

### Stand der Technik

Aus der Medizin, den Naturwissenschaften und der Technik sind zahlreiche Verfahren zur Untersuchung von Proben bekannt, mittels derer mikroskopische Eigenschaften von Proben, wie beispielsweise Gewebeschnitten, Zellkulturen, Schliffen eines Werkstoffes oder ähnlicher Proben für das menschliche Auge erkennbar gemacht werden können.

Eine wesentliche Technik stellt dabei die Rasterkraftmikroskopie dar. Bei der Rasterkraftmikroskopie wird mittels einer oder mehreren Probenspitzen die Oberfläche oder ein oberflächennaher Bereich der Probe untersucht, beispielsweise um ein Oberflächenprofil bis hin zur Detektion einzelner Atome oder Moleküle auf der Oberfläche der Probe sichtbar zu machen. Zahlreiche derartiger Rasterkraftmikroskopieverfahren sind aus der Technik bekannt. Der Begriff "Rasterkraftmikroskopie" bzw. "Rasterkraftmikroskop", wie er im Rahmen der vorliegenden Erfindung verwendet wird, soll sämtliche derartiger Techniken erfassen, bei welchen die Probe mittels einer oder mehreren Probenspitzen untersucht wird. Neben der Rasterkraftmikroskopie im eigentlichen Sinne (auch atomic force microscopy, AFM, genannt) soll dieser Begriff daher auch andere Nadeltechniken umfassen, welche üblicherweise unter dem Sammelbegriff "Rastersondenmikroskopie" zusammengefasst werden, also beispielsweise Rastertunnelmikroskopietechniken (scanning tunneling microscopy, STM), Magnetkraftmikroskopie (magnetic force microscopy, MFM) oder optische Nahfeldmikroskopie (scanning near-field optical microscopy, SNOM). Diese Verfahren beruhen sämtlich auf einer Wechselwirkung (beispielsweise einer mechanischen, quantenmechanischen oder elektrischen Wechselwirkung) einer oder mehrerer Probenspitzen mit der Oberfläche der Probe. Ohne Beschränkung weiterer Möglichkeiten und ohne Beschränkung der Anwendung verschiedener Betriebsmodi wird im Folgenden die AFM-Technik beschrieben. Rasterkraftmikroskopieverfahren im obigen Sinne können beispielsweise unterteilt werden in Verfahren im Kontakt-Modus, bei welchem die Probenspitze in mechanischem Kontakt mit der Probenoberfläche steht, Nicht-Kontakt-Modi, bei welchen die Probenspitze beispielsweise oberhalb der Probenoberfläche angeordnet ist und dort beispielsweise in Schwingungen versetzt wird, oder auch intermittierende Modi, welche auch häufig als "Tapping Mode" bezeichnet werden. Für Einzelheiten dieser Betriebsmodi kann auf die einschlägige Literatur zur Rasterkraftmikroskopie bzw. zur Rastersondenmikroskopie allgemein verwiesen werden.

Neben den Rasterkraftmikroskopieverfahren existieren zahlreiche optische Bildgebungsverfahren, also Bildgebungsverfahren, welche unter Ausnutzung elektromagnetischer Strahlen ein Abbild der Probe oder eines Bereiches der Probe erstellen. Die elektromagnetischen Strahlen können dabei beispielsweise im Rahmen der vorliegenden Erfindung im Bereich des sichtbaren Spektrums und/oder des ultravioletten Spektrums und/oder im Bereich des infraroten Spektrums gewählt werden. Auch andere Bereiche sind jedoch grundsätzlich denkbar. Dabei beruhen die optischen Bildgebungsverfahren auf der Wechselwirkung der elektromagnetischen Strahlung mit der Probe oder mit Bestandteilen der Probe. Als Beispiele derartiger Wechselwirkungen, welche auch in Kombination eingesetzt werden können, sind Absorption (auch Mehrphotonenabsorption), Streuung oder Fluoreszenz bzw. Phosphoreszenz zu nennen.

Aus der Literatur sind Ansätze bekannt, Rasterkraftmikroskopieverfahren und optische Bildgebungsverfahren zu kombinieren. So lassen sich beispielsweise mittels eines Rasterkraftmikroskops aufgenommene Oberflächenprofile einer Probe mit hochauflösenden Fluoreszenzmikroskopieaufnahmen (zum Beispiel Laserfluoreszenzmikroskopie) kombinieren, um verschiedene Strukturen innerhalb der Probe zu unterscheiden und sichtbar machen zu können. Auf diese Weise lassen sich Mehrkanal-Aufnahmen der Probe mit hoher Auflösung erzeugen, wobei gleichzeitig die Probe auch mechanisch manipulierbar sein kann.

Derartige kombinierte Bildgebungsverfahren sind beispielsweise aus R. Harper: "Atomic force fluorescence microscopy reveals elasticity of blood clot fibers", Biophotonics International, Oktober 2006, Seite 20 bis 21 bekannt. Dort werden Fluoreszenzmikroskopieaufnahmen, welche mittels eines invertierten optischen Fluoreszenzmikroskops gewonnen sind, Rasterkraftmikroskopieaufnahmen überlagert, um die Strukturen von Fasern eines Blutgerinnsels sichtbar zu machen. Weitere Beispiele sind aus den Produktbroschüren "Combined Fluorescence and Atomic Force Microscopy for Cytoskeleton Morphology", Veeco Instruments Inc., 2007 und "diBioScope II", Veeco Instruments Inc., 2007, bekannt. Dabei wird mittels eines inversen Fluoreszenzmikroskops die Probe von unten beobachtet, während sie von oben mit einem Rasterkraftmikroskop abgetastet wird. Das Rasterkraftmikroskop kann beispielsweise auch verwendet werden, um sehr kleine Strukturen (zum Beispiel Fibrin-Fasern mit einem Durchmesser von ca. 100 nm) zu manipulieren.

Eine Schwierigkeit dieser kombinierten Bilddatenerfassung liegt - wie auch bei nahezu allen anderen kombinierten Messverfahren - darin, die mittels der unterschiedlichen Verfahren aufgenommenen Bilddaten exakt miteinander zu korrelieren, um auch bei Auflösungen bis beispielsweise hin in den Bereich von einigen 100 nm eine exakte Überlagerung der Bilder zu gewährleisten. Die genannte Problematik erfordert üblicherweise eine exakte Ausrichtung der unabhängig voneinander aufgenommenen Bilder sowie eine Skalierung und Linearisierung dieser Bilder. Die Skalierung ist erforderlich, da die aufgenommenen Bildbereiche der unterschiedlichen Aufnahmetechniken stark voneinander abweichen können. Die Linearisierung ist erforderlich, da beispielsweise Abstände zwischen einzelnen Bildpunkten nicht in allen Fällen gleich sind und sich bei den unterschiedlichen Aufnahmetechniken diese Abstände unterschiedlich verändern können.

Für diese Ausrichtung, die Skalierung und die Linearisierung sind in der Regel aufwändige Verfahren erforderlich, welche auf der Erkennung von Strukturen in den Bilddaten beruhen. Beispielsweise können einzelne Fasern als Anhaltspunkte dienen, wie die unabhängig voneinander gewonnenen Bilddaten überlagert werden sollen. Derartige "Marker" in den Bilddaten sind jedoch aus verschiedenen Gründen äußerst komplex zu handhaben, da diese in den unterschiedlichen Bildgebungsverfahren auf verschiedene Weise abgebildet werden. Wie oben bereits dargelegt, bilden Rasterkraftmikroskopieverfahren im Wesentlichen die Oberflächen oder oberflächennahe Bereiche der Probe ab, wohingegen optische Verfahren, wie beispielsweise Fluoreszenzverfahren, auch Informationen aus tiefer gelegenen Bereichen der Probe liefern. Nicht in allen Fällen sind daher die Oberflächeninformationen mit entsprechenden Informationen aus tiefer gelegenen Schichten, welche mittels optischer Verfahren gewonnen werden, vollständig korrelierbar. Eine weitere Problematik besteht darin, dass üblicherweise dünne Proben verwendet werden, deren Kontrast, selbst bei künstlicher Verstärkung durch beispielsweise Anfärbetechniken oder Polarisationslichtverfahren, vergleichsweise schwach ist. Auch dies erschwert eine Überlagerung der Bilddaten erheblich.

Aus WO 2007/076828 A1 ist ein Verfahren zum Betreiben eines Messsystems mit einem Rastersondenmikroskop und einem Lichtmikroskop bekannt. Dabei wird mit Hilfe des Lichtmikroskops ein Bild von einer Messspitze des Rastersondenmikroskops aufgenommen. Anhand des Bildes der Messspitze werden das Rastersondenmikroskop, das Lichtmikroskop und die zu untersuchende Probe zueinander ausgerichtet.

EP 1 179 748 B1 offenbart eine Kombination von abtastenden und abbildenden Methoden bei der Überprüfung von Photomasken. Dazu werden ein Rasterkraftmikroskop und ein Lichtmikroskop verwendet, wobei das Rasterkraftmikroskop so zu dem Lichtmikroskop ausgerichtet wird, dass sich eine Messspitze des Rasterkraftmikroskops im Bildfeld des Lichtmikroskops befindet.

### Aufgabe der Erfindung

Es ist daher eine Aufgabe der vorliegenden Erfindung, ein Verfahren und eine Vorrichtung zur Abbildung mindestens einer Probe bereitzustellen, welche die oben beschriebenen Nachteile bekannter kombinierter Verfahren zumindest weitgehend vermeiden. Insbesondere sollen das Verfahren und die Vorrichtung eine exakte Korrelation der mittels eines Rasterkraftmikroskopieverfahrens und mittels eines optischen Bildgebungsverfahrens gewonnenen Daten ermöglichen.

### Offenbarung der Erfindung

Diese Aufgabe wird durch ein Verfahren und eine Vorrichtung gemäß den unabhängigen Ansprüchen gelöst. Vorteilhafte Weiterbildungen der Erfindung, welche einzeln oder in Kombination realisierbar sind, sind in den abhängigen Ansprüchen dargestellt. Der Wortlaut sämtlicher Ansprüche wird hiermit durch Bezugnahme zum Inhalt der vorliegenden Beschreibung gemacht.

Das vorgeschlagene Verfahren kann insbesondere unter Verwendung einer erfindungsgemäßen Vorrichtung durchgeführt werden, und die Vorrichtung kann derart ausgestaltet sein, dass mittels dieser Vorrichtung ein erfindungsgemäßes Verfahren durchgeführt werden kann. Diesbezüglich kann hinsichtlich möglicher Ausgestaltungen des Verfahrens auf die Beschreibung der Vorrichtung verwiesen werden und hinsichtlich möglicher Ausgestaltungen der Vorrichtung auf das Verfahren.

Die erfindungsgemäße Vorrichtung umfasst mindestens ein Rasterkraftmikroskop im Sinne der obigen Beschreibung, welches zur Untersuchung der Probe mittels eines Rasterkraftmikroskopieverfahrens ausgestaltet ist. Zu diesem Zweck umfasst das Rasterkraftmikroskop mindestens eine Probenspitze, welche beispielsweise über der Probe positionierbar ist. Anstelle einer einzelnen Probenspitze kann auch eine Mehrzahl derartiger Probenspitzen vorgesehen sein, welche beispielsweise in einem Array von Probenspitzen angeordnet sind. Die Probenspitze kann beispielsweise an einem Hebelarm (Cantilever) aufgenommen sein. Im Rahmen der vorliegenden Erfindung kann das Rasterkraftmikroskop grundsätzlich nach allen der oben beschriebenen bekannten Betriebsmodi bekannter Rastersondenmikroskope betrieben werden.

Neben dem mindestens einen Rasterkraftmikroskop umfasst die Vorrichtung weiterhin mindestens eine optische Vorrichtung zur Untersuchung der Probe, wobei wiederum bezüglich möglicher Ausgestaltungen des Begriffs "optische Vorrichtung" auf die obige Beschreibung verwiesen werden kann. Die optische Vorrichtung soll eingerichtet sein, um mittels mindestens eines optischen Bildgebungsverfahrens die Probe zu untersuchen. Unter einem optischen Bildgebungsverfahren ist dabei, wie oben beschrieben, ein Bildgebungsverfahren unter Verwendung elektromagnetischer Strahlen, vorzugsweise von Strahlen im sichtbaren und/oder ultravioletten und/oder infraroten Spektralbereich, zu verstehen. Wie unten beschrieben, kann die optische Vorrichtung insbesondere mindestens ein Mikroskop umfassen, wobei alternativ oder zusätzlich jedoch auch beispielsweise Kamerasysteme oder andere optische Vorrichtungen oder Kombinationen derartiger Vorrichtungen denkbar sind.

Der Begriff "Kamera" oder "Kamerasystem" im Sinne der vorliegenden Erfindung soll hier und im Folgenden in weitem Sinne zu verstehen sein und soll jegliche Art optischer Detektoren umfassen, vorzugsweise Detektoren, welche mindestens einen für elektromagnetische Strahlung empfindlichen Detektorbereich aufweisen, vorzugsweise ein 1- oder 2-dimensionales Array derartiger Detektorbereiche. Dementsprechend kann der Begriff "Kamera" beispielsweise ein Detektorarray umfassen. Als Beispiele derartiger Detektoren, welche unter dem Begriff Kamera mit umfasst sein sollen, kann die Kamera beispielsweise eine oder mehrere der folgenden Detektoren umfassen, auch in Kombination und/oder jeweils einzeln oder als Array: Photomultiplier, Photodioden, schnelle Photodiode (Avalanche Photodioden, APDs), Charge Coupled Devices (CCDs), Electron Multiplying CCDs (EMCCDs).

Die erfindungsgemäße Vorrichtung umfasst weiterhin mindestens eine Kalibriervorrichtung, und das Verfahren umfasst mindestens einen Kalibrierschritt. Die Kalibriervorrichtung kann beispielsweise mindestens eine Datenverarbeitungseinrichtung umfassen, welche beispielsweise zur Durchführung des Kalibrierschritts entsprechend programmtechnisch eingerichtet sein kann. Daneben kann die Kalibriervorrichtung beispielsweise auch optische Komponenten umfassen, beispielsweise Bestandteile der oben beschrieben optischen Vorrichtung und/oder weitere optische Komponenten.

In dem mindestens einen Kalibrierschritt wird mindestens eine Position der Probenspitze mittels des mindestens einen optischen Bildgebungsverfahrens erkannt. Wie unten näher ausgeführt wird, kann diese Erkennung beispielsweise unter Verwendung von Reflexionslichttechniken erfolgen, da die meisten Probenspitzen (welche beispielsweise aus Silizium hergestellt sein können) reflektierende Eigenschaften aufweisen. Die Erkennung der Position der Probenspitze, also beispielsweise eines Bereichs und/oder eines Punktes, an welchem die Probenspitze angeordnet ist, kann, wie unten ebenfalls näher ausgeführt wird, beispielsweise manuell oder auch, zum Beispiel unter Verwendung eines Bilderkennungsverfahrens, automatisch erfolgen.

Anschließend wird mindestens ein Bildaufnahmebereich des optischen Bildgebungsverfahrens in einer vorgegebenen Ausrichtung zu der Position der Probenspitze gewählt. Dieser Bildaufnahmebereich kann beispielsweise einen einzigen Bildpunkt eines einzelnen Detektorelements der optischen Vorrichtung umfassen, beispielsweise ein einzelnes Pixel eines Detektor-Arrays (zum Beispiel eines CCD-Arrays), oder kann auch mehrere derartige Bereiche umfassen, beispielsweise einen Pixelbereich. Wenn mehrere Bereiche verwendet werden, so kann beispielsweise eine Bildinformation dieser Bereiche gemittelt werden, oder die Informationen können auch einzeln ausgewertet werden. Unter einer "vorgegebenen Ausrichtung" zu der Position der Probenspitze ist dabei im Rahmen der vorliegenden Erfindung eine vorgegebene räumliche Anordnung des Bildaufnahmebereichs relativ zur Probenspitze zu verstehen. Beispielsweise kann dies ein fester Abstand in einem vorgegebenen Koordinatensystem sein. Besonders bevorzugt ist es, wenn die vorgegebene Ausrichtung derart gewählt wird, dass der Bildaufnahmebereich, beispielsweise ein Aufnahmepixel, vollständig mit der Position der Probenspitze übereinstimmt.

Weiterhin umfasst die erfindungsgemäße Vorrichtung mindestens eine Bildaufnahmesteuerung, welche eingerichtet sein kann, um mindestens einen Bildaufnahmeschritt durchzuführen. In diesem mindestens einen Bildaufnahmeschritt wird eine räumlich synchronisierte Aufnahme von Daten mittels des Rasterkraftmikroskopieverfahrens und mittels des optischen Bildgebungsverfahrens durchgeführt. Dabei kann dasselbe optische Bildgebungsverfahren verwendet werden, welches auch für die Durchführung des Kalibrierschrittes verwendet wurde. Alternativ oder zusätzlich kann jedoch auch eine andere Art von optischem Bildgebungsverfahren eingesetzt werden. So kann beispielsweise für den Kalibrierschritt als Kalibrierverfahren ein Reflexionslichtverfahren als optisches Bildgebungsverfahren eingesetzt werden, wobei anschließend in dem Bildaufnahmeschritt beispielsweise ein Fluoreszenzlichtverfahren verwendet werden kann. Auch Kombinationen verschiedener Bildgebungsverfahren für den Kalibrierschritt und/oder den Bildaufnahmeschritt sind denkbar.

Unter einer "räumlich synchronisierten" Aufnahme der optischen Bildgebung und des Rasterkraftmikroskopieverfahrens ist dabei eine Aufnahme zu verstehen, bei welcher aufgrund der vorgegebenen Ausrichtung zwischen der Probenspitze und des Bildaufnahmebereichs die relative räumliche Anordnung der Messinformationen des Rasterkraftmikroskops und der Messinformationen des optischen Bildgebungsverfahrens bekannt ist. Diese relative Ausrichtung kann dabei tatsächlicher Natur sein und/oder virtueller Natur. Unter einer tatsächlichen Natur ist dabei zu verstehen, dass der räumliche Abstand zwischen dem Bildaufnahmebereich bekannt ist (beispielsweise in einem Koordinatensystem) und konstant gehalten wird, beispielsweise durch eine entsprechende mechanische Einstellung des Systems. Unter einer virtuellen Natur ist dabei zu verstehen, dass beispielsweise die Position der Probenspitze in einem Gesamtbild, welches von dem optischen Bildgebungsverfahren erfasst wird, bekannt ist und der Bildaufnahmebereich lediglich als ein Ausschnitt aus diesem Gesamtbild gewählt wird, welcher diese Position erfasst, beispielsweise einen einzelnen Bildpunkt oder eine beschränkte Mehrzahl von Bildpunkten im Bereich der Nadelspitze. Zeitlich muss dabei die Aufnahme mittels des Rasterkraftmikroskops und des optischen Bildgebungsverfahrens nicht notwendigerweise synchronisiert sein, sondern die Aufnahme kann auch mit einem Zeitversatz erfolgen. Alternativ oder zusätzlich kann jedoch auch eine zeitliche Synchronisation erfolgen, beispielsweise im Rahmen eines Scans und/oder zur Beobachtung zeitlich veränderlicher Proben.

Werden mittels des Rasterkraftmikroskopieverfahrens und mittels des optischen Bildgebungsverfahrens beispielsweise gleich viele Messinformationen aufgenommen, so ist es besonders bevorzugt, wenn jede Messinformation des Rasterkraftmikroskops genau einer Messinformation des optischen Bildgebungsverfahrens zugeordnet ist, wobei die relative räumliche Anordnung der Orte auf bzw. in der Probe, von welchen diese Messinformationen jeweils stammen, bekannt ist. Vorzugsweise stammen diese Messinformationen vom selben Ort der Probe, wobei unter "vom selben Ort der Probe" auch die Situation zu verstehen ist, dass beispielsweise die Messinformation des optischen Bildgebungsverfahrens aus einer tiefer gelegenen Probenschicht stammt als die Messinformation des Rasterkraftmikroskopieverfahrens. Wahlweise kann jedoch beispielsweise auch ein vorgegebener räumlicher Offset (beispielsweise ein bestimmter Versatz in x-Richtung und/oder ein bestimmter Versatz in y-Richtung) eingestellt werden. Im Wesentlichen soll sich die relative räumliche Ausrichtung auf die lateralen Koordinaten beziehen, also bei einer flachen Probe beispielsweise Ortsinformationen in einer Ebene parallel zur Probe.

Im Gegensatz zu den aus dem Stand der Technik bekannten kombinierten Aufnahmeverfahren bieten die vorgeschlagene Vorrichtung und das vorgeschlagene Verfahren eine Vielzahl von Vorteilen. So muss nicht nachträglich eine aufwändige und teilweise technisch kaum realisierbare Synchronisation bzw. Korrelation der mittels der unterschiedlichen Verfahren gewonnenen Bilddaten erfolgen, sondern bereits die Aufnahme der Bilddaten erfolgt räumlich synchronisiert, d.h. korreliert. Beispielsweise kann das Verfahren derart zugeordnet werden, dass jedem Bildpunkt des Rasterkraftmikroskopieverfahrens genau ein Bildpunkt des optischen Bildgebungsverfahrens zugeordnet ist. Auch eine andere Zuordnung ist denkbar, beispielsweise eine gruppenweise Zuordnung. Durch das Wegfallen der nachträglichen Korrelation der Bilddaten aufgrund der bereits korrelierten bzw. räumlich synchronisierten Aufnahme der Bilddaten lässt sich somit die Geschwindigkeit der Aufnahme und der Auswertung der Bilddaten erheblich steigern, da auf eine aufwändige Datenaufbereitung zur Korrelation bzw. Synchronisation der Bilddaten verzichtet werden kann. Auf diese Weise lassen sich auch Rechnerkapazitäten einsparen. Zudem lassen sich unmittelbar die Bilddaten beispielsweise graphisch auf einem Bildschirm darstellen, beispielsweise in einer überlagerten Darstellung.

Das Verfahren und die Vorrichtung können auf verschiedene Weisen vorteilhaft weiterentwickelt werden. So kann beispielsweise der Bildaufnahmeschritt ein synchronisiertes Scanverfahren umfassen, bei welchem nacheinander verschiedene Punkte und/oder Bereiche der Probe erfasst, insbesondere abgerastert werden. Dieses Abrastern kann beispielsweise zeilenweise oder in Form einer Rastermatrix erfolgen. Verschiedene derartiger Rasterverfahren sind denkbar. Dabei kann beispielsweise an jedem Punkt und/oder Bereich des Rasters eine Datenaufnahme mittels des Rasterkraftmikroskops und des optischen Bildgebungsverfahrens durchgeführt werden. Alternativ oder zusätzlich kann die Rasterung jedoch auch so erfolgen, dass beispielsweise lediglich an jedem N-ten Rasterpunkt auch eine optische Bilddatenaufnahme erfolgt und/oder an jedem M-ten Bildpunkt eine Datenaufnahme mittels des Rasterkraftmikroskopieverfahrens. Verschiedene Möglichkeiten sind denkbar.

Die Verfahrensvariante des synchronisierten Scanverfahrens bewirkt also, dass ein größerer Bereich der Probe abgerastert werden kann, analog beispielsweise zu den bislang bekannten Rasterkraftmikroskopieverfahren und den bislang bekannten optischen Rastermikroskopverfahren, beispielsweise konfokalen Scanmikroskopieverfahren. Im Gegensatz zu diesen bekannten Verfahren erfolgt die Abrasterung jedoch erfindungsgemäß synchronisiert, so dass die Bilddaten unmittelbar und vorzugsweise ohne weitere Korrelationsschritte, wie beispielsweise Skalierung, Linearisierung oder Ausrichtung (Alignment) miteinander korrelieren bzw. synchronisiert sind.

Für das Scanverfahren können unterschiedliche Techniken eingesetzt werden, welche teilweise auch kombinierbar sind. So kann beispielsweise ein Stage-Scan-Verfahren eingesetzt werden, bei welchem in dem Bildaufnahmeschritt die Probenspitze und die optische Vorrichtung (bzw. ein Teil dieser optischen Vorrichtung, beispielsweise ein Mikroskopobjektiv) zur Durchführung des optischen Bildgebungsverfahrens im Wesentlichen ortsfest belassen werden, wobei die Probe räumlich bewegt wird. Für diese Bewegung der Probe kann beispielsweise ein Positionierungssystem verwendet werden, beispielsweise ein x-y-Positionierungssystem, oder ein ein- oder dreidimensionales Positionierungssystem. Beispielsweise kann das x-y-Positionierungssystem für ein Abrastern der Probe unterschiedliche Linearaktuatoren in x- und y-Richtung umfassen, welche angesteuert werden können. Verschiedene weitere Ausführungsformen derartiger Positionierungssysteme sind dem Fachmann bekannt. Die Abrasterung kann allgemein in Form einer kontinuierlichen Bewegung oder in Form einer diskotinuierlichen Bewegung, also einer Abfolge von Repositionierungen und Ruhephasen erfolgen.

Alternativ oder zusätzlich zu dem Stage-Scan-Verfahren kann auch ein so genanntes Tip-Scan-Verfahren eingesetzt werden. Bei diesem Tip-Scan-Verfahren werden in dem Bildaufnahmeschritt die Probenspitze (Tip) und die optische Vorrichtung zur Durchführung des optischen Bildgebungsverfahrens räumlich bewegt, wobei die Probe vorzugsweise ortsfest belassen wird. Wie oben beschrieben, können die Verfahren jedoch auch kombiniert werden, also beispielsweise im Rahmen einer Probenbewegung in einer ersten Dimension (z.B. x-Richtung) und einer Bewegung der Probenspitze und der optischen Vorrichtung in einer anderen Dimension (z.B. y-Richtung). Wie ebenfalls oben beschrieben, kann auch lediglich ein Teil der optischen Vorrichtung bewegt werden, beispielsweise ein Objektiv. Weiterhin kann auch, wie oben beschrieben, der Scan der optischen Vorrichtung lediglich virtuell erfolgen, also durch gezieltes Verändern des Bildaufnahmebereichs innerhalb eines Gesamtbildes der optischen Vorrichtung, wobei der Bildaufnahmebereich beispielsweise der Probenspitze folgt, das Gesamtbild jedoch unverändert bleibt. Die Positionierung der Probenspitze und (falls keine virtuelle Positionierung gewählt wird) der optischen Vorrichtung kann beispielsweise durch eine oder mehrere Positionierungsvorrichtungen erfolgen, beispielsweise wiederum durch ein-, zwei- oder drei-dimensionale Positionierungssysteme mit beispielsweise einer entsprechenden Anzahl räumlicher Aktuatoren. Beispielsweise kann die räumliche Bewegung der Probenspitze und der optischen Vorrichtung wiederum synchronisiert erfolgen, beispielsweise indem die optische Vorrichtung durch eine geeignete Positionierungsvorrichtung der Probenspitze nachgeführt wird. Beispielsweise kann nach jedem Nachführen der Probenspitze und/oder nach einer beispielsweise vorgegebenen Anzahl von Nachführungen (das heißt zum Beispiel jeden N-ten Rasterpunkt) wiederum ein Kalibrierschritt durchgeführt werden. Auf diese Weise kann auch bei einem Nachführen die räumliche Synchronisation gewährleistet werden.

Bei dem Scanverfahren können zu jedem Scanpunkt des Rasters Bilddaten aufgenommen werden. Diese Bilddatenaufnahme erfolgt vorzugsweise derart, dass zu jedem Punkt und/oder Bereich des Rasters Bilddaten erzeugt werden, welche mindestens eine gemeinsame Ortsinformation des Punktes und/oder Bereichs, mindestens eine Messinformation des Rasterkraftmikroskopieverfahrens und mindestens eine Messinformation des optischen Bildgebungsverfahrens umfassen. Auf diese Weise kann beispielsweise eine mehrdimensionale Bilddaten-Matrix erzeugt werden. Alternativ oder zusätzlich können die Daten jedoch auch getrennt verarbeitet werden, beispielsweise in Form eines Datenblocks mit Ortsinformationen und Messinformationen des Rasterkraftmikroskopieverfahrens und eines Datenblocks mit Ortsinformationen und Messinformationen des optischen Bildgebungsverfahrens. Werden mehrere Rasterkraftmikroskopieverfahren bzw. optische Bildgebungsverfahren kombiniert, so können die jeweiligen Messinformationen auch mehrdimensional sein.

Der besondere Vorteil dieser Aufnahmetechnik besteht darin, dass sich die Messinformationen des Rasterkraftmikroskops und des optischen Bildgebungsverfahrens jeweils auf dieselbe Ortsinformation, beispielsweise dieselben zweidimensionalen Koordinaten des Punktes oder Bereichs des Rasters, beziehen. Eine nachträgliche Skalierung, Ausrichtung oder Linearisierung ist aufgrund dieser synchronisierten Datenaufnahme nicht mehr erforderlich. Die gemeinsame Ortsinformation kann beispielsweise eine Positionierungsinformation mindestens eines Positionierungssystems zur Positionierung der Probe und/oder zur Positionierung der Probenspitze umfassen. Auf diese Weise können beispielsweise x-, y-Positionssignale, Pixel-Clock, Pixel-Read-Out oder ähnliche Signale eines Probentisches und/oder einer anderen Art von Positionierungssystem verwendet werden, um die gemeinsame Ortsinformation zu generieren.

Eine weitere vorteilhafte Weiterbildung der Erfindung betrifft eine Ausgestaltung des Kalibrierschrittes mittels des optischen Bildgebungsverfahrens. Beispielsweise kann bei dem Kalibrierschritt mindestens ein Bildausschnitt aufgenommen werden, beispielsweise ein Bildausschnitt, welcher zunächst manuell oder auch automatisch festgelegt wird. Beispielsweise kann eine "Region of Interest" (ROI) bestimmt werden, welche als Bildausschnitt aufgenommen wird. Beispielsweise kann dies dadurch geschehen, indem zunächst ein Übersichtsbild (zum Beispiel mittels eines Konfokalmikroskops und/oder eines Transmissionsmikroskops) aufgenommen wird. Weiterhin kann in dem mindestens einen Bildausschnitt die Position der Probenspitze identifiziert werden, beispielsweise mittels eines Reflexionsverfahrens. Diese Identifikation der Probenspitze kann beispielsweise zumindest teilweise automatisch oder semiautomatisch erfolgen, beispielsweise mittels mindestens eines Bilderkennungsverfahrens. Beispielsweise sind typische Probenspitzen geometrisch ausgestaltet, beispielsweise in Form einer Pyramide mit rechteckigem oder quadratischem Grundriss, beispielsweise einer geätzten Silizium-Pyramide. Insbesondere der rechteckige oder quadratische Grundriss kann hier auf einfache Weise mittels eines Bilderkennungsverfahrens erkannt werden und dann hieraus (beispielsweise durch Bestimmung des Mittelpunks des Rechtecks bzw. Quadrates und/oder durch direkte Erkennung der Probenspitze) die Position der Probenspitze identifiziert werden. Dieses Bilderkennungsverfahren kann auch iterativ erfolgen, beispielsweise iterativ mit mindestens einem jeweils vergrößerten Bildausschnitt. Auf diese Weise kann zunächst grob die Position der Probenspitze identifiziert werden und anschließend durch Anpassung der Bildausschnitte eine Identifikation mit höherer Auflösung erfolgen. Alternativ oder zusätzlich zu einer automatischen Identifikation der Probenspitze kann auch eine zumindest teilweise manuelle Identifikation erfolgen. Dies kann beispielsweise dadurch geschehen, dass manuell (beispielsweise mittels eines Eingabegerätes wie einer Maus, einem Trackball, einem Touchpad oder einem ähnlichen Eingabegerät) mindestens ein Zeigerelement (beispielsweise ein Cursor) in der Position der Probenspitze in dem Bildausschnitt positioniert wird, um manuell die Position der Probenspitze zu identifizieren. Auf diese Weise kann, automatisch, semiautomatisch oder manuell, die Ausrichtung des Bildaufnahmebereichs des optischen Bildgebungsverfahrens relativ zur Position der Probenspitze gewählt werden. Diese Ausrichtung kann auch als "Beam Park" bezeichnet werden, insbesondere wenn Laserscanmikroskopieverfahren als optische Bildgebungsverfahren verwendet werden.

Wie oben beschrieben kann auch eine zeitliche Synchronisation der Rasterkraftmikroskopie und der optischen Bildgebung erfolgen. Diese zeitliche Synchronisation der Aufnahme der Messdaten, welche sich bei einer relativen Bewegung der Probe zum Rasterkraftmikroskop bzw. der optischen Vorrichtung auch in einer räumlichen Synchronisation auswirken kann, kann auf verschiedene Weise erfolgen. So kann beispielsweise eine Steuerung des Rasterkraftmikroskops eine Datenaufnahme des optischen Bildgebungsverfahrens und/oder - alternativ oder zusätzlich - einer Beleuchtung des optischen Bildgebungsverfahrens, steuern bzw. triggern. Alternativ oder zusätzlich kann auch eine Steuerung des optischen Bildgebungsverfahrens bzw. eine Steuerung der optischen Vorrichtung eine Datenaufnahme des Rasterkraftmikroskopieverfahrens steuern bzw. triggern. Als dritte, ebenfalls auch in Kombination realisierbare Möglichkeit kann auch beispielsweise eine zentrale Steuerung vorgesehen sein, welche eine Datenaufnahme des Rasterkraftmikroskops und des optischen Bildgebungsverfahrens steuert bzw. triggert. Die gesamte Vorrichtung kann auch als integrierte Vorrichtung ausgestaltet sein, wobei die zentrale Steuerung eine zentrale Steuerung der integrierten Vorrichtung, die das Rasterkraftmikroskop und die optische Vorrichtung umfasst, sein kann. Diese zentrale Steuerung kann, wie oben angedeutet, beispielsweise mindestens eine Datenverarbeitungseinrichtung umfassen, beispielsweise eine Datenverarbeitungsvorrichtung mit einer zentralen Recheneinheit, einem oder mehreren flüchtigen oder nicht-flüchtigen Speichern, Ein- und Ausgabegeräten und ähnlichen bekannten Elementen von Datenverarbeitungsvorrichtungen. Insbesondere kann die Steuerung auch programmtechnisch eingerichtet sein, um das Verfahren gemäß einer der beschriebenen Ausführungsformen durchzuführen.

Weitere vorteilhafte Ausgestaltungen der Erfindung betreffen den Kalibrierschritt. Dieser Kalibrierschritt kann, wie oben beschrieben, auch wiederholt durchgeführt werden. Dabei kann die Ausrichtung des Bildaufnahmebereichs relativ zur Position der Probenspitze kontrolliert und/oder korrigiert werden, wobei eine Korrektur beispielsweise durchgeführt werden kann, wenn bei einer Kontrolle eine Abweichung (beispielsweise eine Abweichung oberhalb eines Toleranzbereiches) festgestellt wird. Beispielsweise kann jedem Bildgebungsschritt mindestens ein Kalibrierschritt zugeordnet sein. Alternativ oder zusätzlich kann jedoch auch beispielsweise erst nach einer vorgegebenen Anzahl von Bildgebungsschritten wieder ein Kalibrierschritt durchgeführt werden. Die wiederholte Durchführung des Kalibrierschritts bietet sich insbesondere dann an, wenn die optische Vorrichtung tatsächlich oder virtuell und ganz oder teilweise einer Positionierung der Probenspitze nachgeführt wird, beispielsweise im Rahmen des oben beschriebenen Tip-Scan-Verfahrens. Jedoch auch bei einem Stage-Scan-Verfahren, bei welchem die Probenspitze und die optische Vorrichtung ortsfest belassen werden, kann sich eine wiederholte Durchführung des Kalibrierschritts anbieten, beispielsweise um eine gerätebedingte Drift (welche beispielsweise bei einem Scan über mehrere Minuten aufgrund von thermischen und/oder elektrischen Nichtlinearitäten auftreten kann) auszugleichen bzw. zu korrigieren.

Weitere vorteilhafte Ausgestaltungen der Erfindung betreffen die optische Vorrichtung. So kann, wie oben beschrieben, die optische Vorrichtung für den Kalibrierschritt und den Bildaufnahmeschritt jeweils dieselben Bestandteile bzw. Bildgebungstechniken verwenden. In diesem Fall kann die optische Vorrichtung beispielsweise ein einziges optisches Mikroskop oder eine ähnliche Vorrichtung umfassen. Allerdings werden für die Identifikation der Position der Probenspitze in dem Kalibrierschritt und für die Bildaufnahme in dem optischen Bildgebungsverfahren in der Regel unterschiedliche Eigenschaften bzw. Messprinzipien gefordert. So hat es sich beispielsweise gezeigt, dass, aufgrund der in vielen Fällen reflektierenden Eigenschaften der Probenspitze, für den Kalibrierschritt eine Reflexionslichttechnik besonders vorteilhaft ist. Für den Bildaufnahmeschritt können hingegen andere Techniken eingesetzt werden, wie beispielsweise Fluoreszenztechniken. Dementsprechend ist es besonders bevorzugt, wenn die mindestens eine optische Vorrichtung mindestens eine erste optische Vorrichtung und mindestens eine von der ersten optischen Vorrichtung zumindest teilweise getrennte zweite optische Vorrichtung umfasst, wobei die erste optische Vorrichtung von dem Kalibrierschritt verwendet wird und wobei die zweite optische Vorrichtung für den Bildaufnahmeschritt verwendet wird. Die erste optische Vorrichtung und die zweite optische Vorrichtung können entsprechend unterschiedliche optische Aufnahmetechniken einsetzen. Außerdem können beispielsweise unterschiedliche optische Wellenlängenbereiche und/oder unterschiedliche Beleuchtungsquellen, d.h. Beleuchtungsquellen mit unterschiedlicher räumlicher Anordnung und/oder mit unterschiedlichen optischen Eigenschaften, verwendet werden. Auf diese Weise können der Kalibrierschritt und der Bildaufnahmeschritt getrennt optimiert werden bzw. mit entsprechend optimierten Vorrichtungen durchgeführt werden.

Die optische Vorrichtung kann eine Vielzahl von Vorrichtungen umfassen. So kann diese insbesondere mindestens ein Mikroskop umfassen. Dabei kann wiederum eine Vielzahl möglicher Mikroskope zum Einsatz kommen, beispielsweise ein konfokales Mikroskop, ein Lasermikroskop, insbesondere ein konfokales Lasermikroskop, ein Fluoreszenzmikroskop, beispielsweise ein Laserfluoreszenzmikroskop, ein Scanmikroskop, beispielsweise ein konfokales Scanmikroskop, ein Transmissionsmikroskop oder eine andere Art von Mikroskop. Ohne Beschränkung möglicher weiterer Ausgestaltungen des Mikroskops wird im Folgenden im Wesentlichen auf ein konfokales Laserscanmikroskop Bezug genommen. Alternativ oder zusätzlich kann die optische Vorrichtung auch mindestens eine Kamera umfassen, insbesondere eine CCD-Kamera. Diese Kamera kann allein verwendet werden, beispielsweise in Kombination mit einer oder mehreren Linsen und/oder Objektiven, oder kann auch in Kombination mit einem Mikroskop eingesetzt werden. Auch eine Kombination mehrerer Kameras ist möglich, beispielsweise einer ersten Kamera zur Durchführung des Kalibrierschrittes (also als Bestandteil einer ersten optischen Vorrichtung) und einer zweiten Kamera zur Durchführung des Bildaufnahmeschrittes (also als Bestandteil einer zweiten optischen Vorrichtung gemäß der obigen Beschreibung).

Die optische Vorrichtung kann dementsprechend eingerichtet sein, um eine oder mehrere einer Vielzahl optischer Bildgebungsverfahren durchzuführen. Im Folgenden sind dabei, ohne die Beschränkung weiterer möglicher Ausgestaltungen, insbesondere Fluoreszenzverfahren bevorzugt. Insbesondere kann es sich hierbei um Laserlicht-induzierte Fluoreszenzverfahren handeln. Weiterhin können, alternativ oder zusätzlich, auch Mehrphotonen-Absorptionsverfahren oder andere bekannte Lasermikroskopieverfahren zum Einsatz kommen. Erwähnt seien in diesem Zusammenhang beispielsweise das STED-Verfahren (Stimulated Emission Depletion, siehe beispielsweise WO 1995/021393), das PALM-Verfahren (Photoactivated Localization Microscopy, siehe beispielsweise WO 2006/127692 A2), das PAM-Verfahren (Programmable Array Microscope, siehe beispielsweise US 6,399,935 B1) oder das RESOLFT-Verfahren (Reversable Saturable Optical Fluorescence Transitions, siehe beispielsweise WO 2004/090617 A2). Da Einzelheiten des optischen Bildgebungsverfahrens den Grundgedanken der vorliegenden Erfindung jedoch in der Regel nur unwesentlich beeinflussen, sollen diese Verfahren hier im Einzelnen nicht beschrieben werden, sondern es kann auf die einschlägige Literatur, beispielsweise Literatur zur Laserspektroskopie und/oder zur Lasermikroskopie, verwiesen werden.

Die optische Vorrichtung und das Rasterkraftmikroskop können grundsätzlich derart relativ zueinander angeordnet sein, dass das oben beschriebene Verfahren optimal durchgeführt werden kann. So können die entsprechenden Vorrichtungen beispielsweise auf derselben Seite der Probe angeordnet sein, unter Berücksichtigung der jeweils erforderlichen Strahlengänge. Alternativ oder zusätzlich kann die optische Vorrichtung jedoch auch ganz oder teilweise auf einer dem Rasterkraftmikroskop bzw. der Probenspitze gegenüberliegenden Seite der Probe angeordnet sein. Da sich bei dieser Ausgestaltung die Probenspitze bzw. das Rasterkraftmikroskop und die optische Vorrichtung nur vergleichsweise wenig gegenseitig beeinflussen, ist diese Anordnung bevorzugt. Diese Anordnung erfordert jedoch zumindest teilweise transparente Proben und/oder Probenträger, was nicht in jedem Fall zu gewährleisten ist.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1: einen schematischen Aufbau eines ersten Ausführungsbeispiels einer erfindungsgemäßen Vorrichtung zur Abbildung mindestens einer Probe mit einem konfokalen Laserscanmikroskop;
- Figur 2: einen schematischen Ablaufplan eines erfindungsgemäßen Verfahrens zur Abbildung mindestens einer Probe; und
- Figur 3: ein zur Figur 1 alternatives Ausführungsbeispiel einer erfindungsgemäßen Vorrichtung.

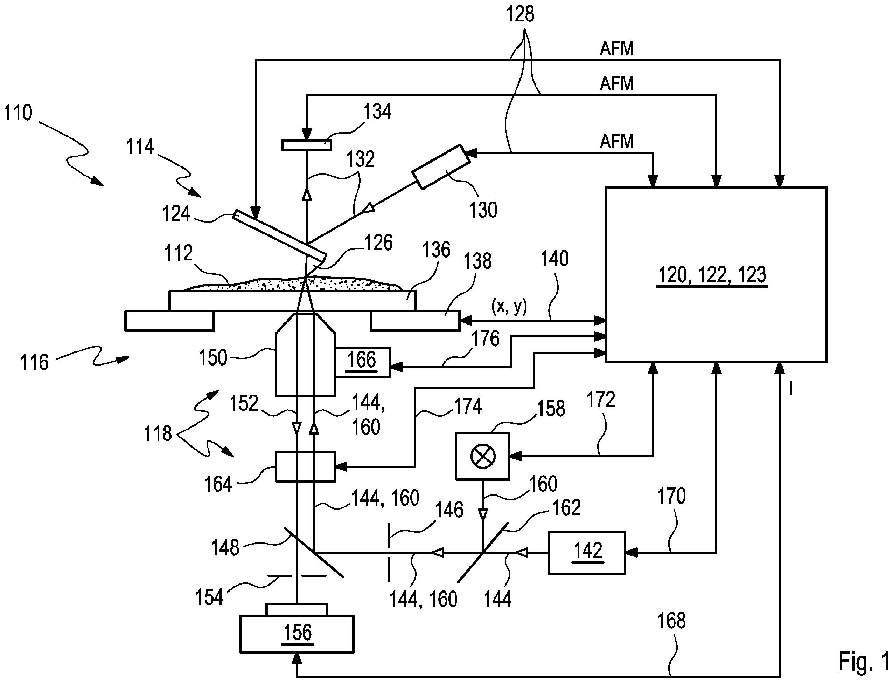

In Figur 1 ist in stark schematisierter Darstellung ein erstes Ausführungsbeispiel einer erfindungsgemäßen Vorrichtung 110 zur Abbildung mindestens einer Probe 112 gezeigt. Die Vorrichtung umfasst ein in Figur 1 lediglich angedeutetes Rasterkraftmikroskop 114 und eine optische Vorrichtung 116 zur Untersuchung der Probe 112 mittels eines optischen Bildgebungsverfahrens. Diese optische Vorrichtung 116 umfasst in dem in Figur 1 dargestellten Ausführungsbeispiel ein konfokales Laserscanmikroskop 118. Weiterhin umfasst die Vorrichtung 110 eine zentrale Steuerung 120, welche gleichzeitig die Aufgabe einer Kalibriervorrichtung 122 und einer Bildaufnahmesteuerung 123 übernimmt. Alternativ oder zusätzlich können jedoch auch mehrere Steuerungen vorgesehen sein, beispielsweise mehrere Bildaufnahmesteuerungen 123, beispielsweise je mindestens eine Bildaufnahmesteuerung für die Rasterkraftmikroskopie und für die optische Bildgebung. Die einzelnen Komponenten der Vorrichtung 110 sollen im Folgenden kurz erläutert werden.

Das Rasterkraftmikroskop 114, welches, alternativ oder zusätzlich zu einem Rasterkraftmikroskop im herkömmlichen Sinne prinzipiell auch jede andere Art von Rastersondenmikroskop umfassen kann, umfasst einen Hebelarm 124 (Cantilever), an dessen Ende eine Probenspitze 126 aufgebracht ist. Der Hebelarm 124 kann anstelle eines einfachen Hebels auch komplexer ausgestaltet sein, beispielsweise in Form eines Dreiecks oder anderen geometrischen Formen. Nicht dargestellt ist in Figur 1 eine üblicherweise bei einem Rasterkraftmikroskop 114 vorhandene Positionierung und/oder eine Anregungsvorrichtung, welche beispielsweise eine Positionierung des Hebelarms 124, eine Schwingung des Hebelarms 124 oder ähnliches umfassen kann, um den Hebelarm 124, je nach Messmodus, beispielsweise zu Schwingungen anzuregen, über der Probe 112 zu positionieren oder ähnliche Aufgaben zu übernehmen. Auch Messvorrichtungen, welche beispielsweise einen Schwingungszustand des Hebelarms 124 erfassen (zum Beispiel Piezowiderstände) sind in Figur 1 nicht dargestellt. Diesbezüglich kann auf übliche Ausgestaltungen von Rasterkraftmikroskopen verwiesen werden.

Weiterhin umfasst das Rasterkraftmikroskop 114 in dem in Figur 1 dargestellten Ausführungsbeispiel einen Laser 130, dessen Laserstrahl 132 auf den Hebelarm 124 gelenkt, von diesem reflektiert und von einer Photodiode 134 aufgenommen wird. Lichtstrahlen sind in den Figuren allgemein, im Gegensatz beispielsweise zu Leitungen, Steuerungen, Daten oder sonstigen Signalen, mit offenen Pfeilspitzen symbolisiert. Die Photodiode 134 kann beispielsweise als segmentierte Photodiode ausgestaltet sein, so dass Bewegungen des Hebelarms 124 erfasst werden können. Auch andere Vorrichtungen zur Erfassung eines Zustandes des Hebelarms 124, und somit der Probenspitze 126, sind denkbar. Der Laser 130, die Photodiode 134 und der Hebelarm 124 bzw. dessen Positionierungssystem und/oder Ansteuerung, sind über AFM-Steuerleitungen 128 mit der zentralen Steuerung 120 verbunden, so dass diese Komponenten des Rasterkraftmikroskops 114 angesteuert und/oder ausgelesen werden können. Alternativ oder zusätzlich zu einer zentralen Steuerung 120 kann die Vorrichtung 110 jedoch auch beispielsweise eine separate AFM-Steuerung umfassen.

Die Probe 112 ist auf einem Probentisch 136 mit einem Positionierungssystem 138 angeordnet. Die Probe 112 kann beispielsweise auf einem Glasträger oder einem ähnlichen Träger angeordnet sein, welcher in Figur 1 nicht dargestellt ist und welcher vorzugsweise transparent für sichtbares Licht ausgestaltet ist. Der Probentisch 136 bzw. das Positionierungssystem 138 sind über eine Probenpositionierungsleitung 140 mit der zentralen Steuerung 120 verbunden, so dass die zentrale Steuerung 120 beispielsweise das Positionierungssystem 138 ansteuern kann, um die Probe 112 zu positionieren, und/oder dass die zentrale Steuerung 120 das Positionierungssystem 138 auslesen kann, um Positionierungskoordinaten (in Figur 1 symbolisch mit (x, y) bezeichnet) auszulesen. Alternativ oder zusätzlich zu der zentralen Steuerung 120 kann die Vorrichtung 110 jedoch wiederum auch eine separate Positionierungssteuerung umfassen, oder die Positionierung kann durch eine separate AFM-Steuerung erfolgen. Alternativ oder zusätzlich zu der beschrieben Probenpositionierung ("Stage-Scan") kann, wie oben dargelegt, auch eine Positionierung des Rasterkraftmikroskops 114 und/oder (virtuell und/oder tatsächlich) der optischen Vorrichtung 116 erfolgen.

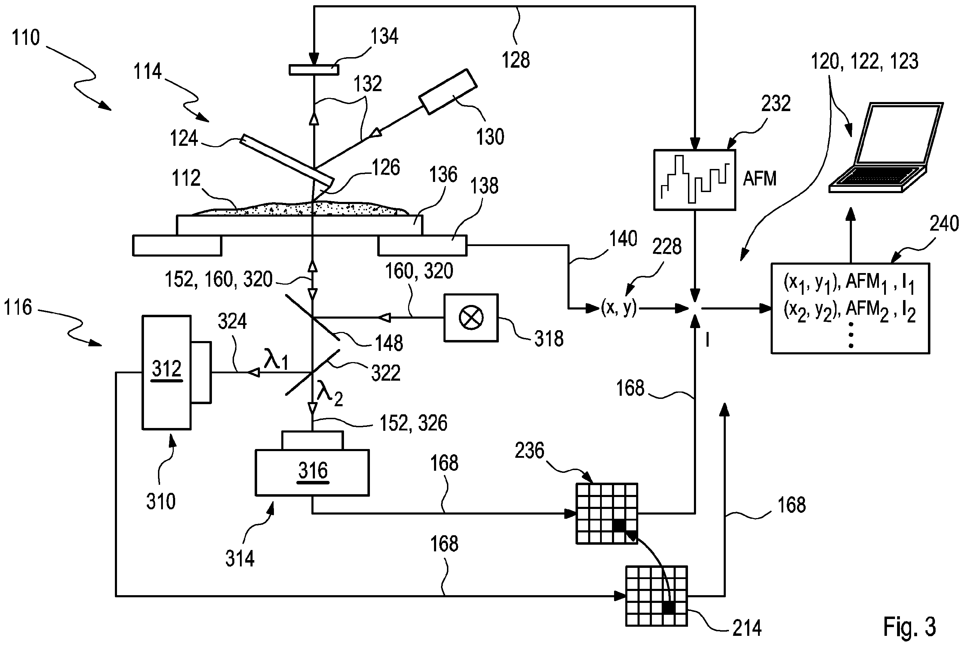

Die optische Vorrichtung 116 umfasst, wie oben dargelegt, in diesem Ausführungsbeispiel ein konfokales Laserscanmikroskop 118. Wie oben ausgeführt, lassen sich jedoch, alternativ oder zusätzlich, auch eine Vielzahl anderer optischer Vorrichtungen einsetzen, wie beispielsweise später anhand des alternativen Ausführungsbeispiels in Figur 3 deutlich wird.

Das konfokale Laserscanmikroskop 118 umfasst einen oder mehrere Laser 142, welche einen oder mehrere Laserstrahlen 144 emittieren können. Diese Laserstrahlen 144 können beispielsweise in ihrer Frequenz durchstimmbar und/oder wählbar sein und können beispielsweise auf eine Fluoreszenzanregungswellenlänge der Probe 112 abgestimmt werden. Die Laserstrahlen 144 durchlaufen optional eine Anregungsblende 146 und werden an einer Überlagerungsvorrichtung 148, beispielsweise einem dichroitischen Strahlteiler und/oder einem Strahlteilerwürfel, umgelenkt und einem Mikroskopobjektiv 150 zugeführt. Dort werden die Laserstrahlen 144 auf die Probe 112 fokussiert, um dort lokal Fluoreszenzlicht anzuregen. Dieses Fluoreszenzlicht, bei welchem es sich allgemein auch um andere Arten von Detektionslicht handeln kann (beispielsweise reflektiertem Licht oder ähnlichem) werden wiederum von dem Mikroskopobjektiv 150 gebündelt, durchlaufen wiederum die Überlagerungsvorrichtung 148 und eine optionale Detektionsblende 154 und werden schließlich von einer Kamera 156 aufgenommen. Die Kamera 156 kann beispielsweise einen CCD-Chip oder ein anderes Detektor-Array umfassen.

Wie oben beschrieben, können mehrere Laser 142 eingesetzt werden. Weiterhin können auch andere Arten von Lichtquellen verwendet werden, welche im Strahlengang des Laserstrahls 144 oder auch an anderer Stelle in der Vorrichtung 110 angeordnet sein können. In dem in Figur 1 dargestellten Ausführungsbeispiel ist - lediglich beispielhaft - eine Kalibrierlichtquelle 158 dargestellt, welche einen Kalibrierlichtstrahl 160 erzeugt, der beispielsweise mittels einer weitern Überlagerungsvorrichtung 162 (beispielsweise wiederum einem Strahlteiler) dem Laserstrahl 144 überlagert werden kann. Alternativ oder zusätzlich könnte die Kalibrierlichtquelle 158 beispielsweise auch in Probennähe 112 angeordnet sein, ohne dass der Kalibrierlichtstrahl 160 den Mikroskopstrahlengang des konfokalen Laserscanmikroskops 118 durchlaufen würde.

Weiterhin umfasst das konfokale Laserscanmikroskop 118 eine Scanvorrichtung 164, welche in Figur 1 lediglich symbolisch angedeutet ist. Diese Scanvorrichtung 164 kann beispielsweise einen oder mehrere Galvanometerspiegel umfassen und kann beispielsweise einen ein- oder zweidimensionalen Scan durch entsprechenden Strahlversatz des Laserstrahls 144 und/oder des Detektionslichts (beispielsweise des Fluoreszenzlichts 152) bewirken. Optional ist in Figur 1 symbolisch weiterhin eine Mikroskoppositionierung 166 symbolisch angedeutet, mittels derer beispielsweise ein Bildausschnitt des konfokalen Lasermikroskops 118 auf der Probe 112 gewählt werden kann.

Auch die einzelnen Komponenten der optischen Vorrichtung 116 bzw. des konfokalen Lasermikroskops 118 können vorzugsweise von der zentralen Steuerung 120 angesteuert bzw. ausgelesen werden. Zu diesem Zweck kann beispielsweise die zentrale Steuerung 120 mittels einer oder mehrerer Leitungen, die auch ganz oder teilweise zusammengefasst sein können, mit einzelnen Komponenten verbunden sein. Hierbei kann es sich beispielsweise um drahtgebundene Leitungen handeln, oder die Leitungen können auch ganz oder teilweise als drahtlose Verbindungen ausgestaltet sein. So kann die zentrale Steuerung 120 beispielsweise mittels einer Kameraleitung 168 mit der Kamera 156 verbunden sein. Die Messsignale der Kamera 156 bzw. Signale einzelner, relevanter Bildbereiche (beispielsweise eines oder mehrerer der Probenspitze 126 zugeordneter Pixel) oder andere Kamerasignale sind in den Figuren symbolisch und ohne Beschränkung möglicher Ausführungsformen mit I bezeichnet. Weiterhin kann die zentrale Steuerung 120 beispielsweise mittels einer Lasersteuerleitung 170 mit dem Laser 142, mittels einer Kalibrierlichtleitung 172 mit der Kalibrierlichtquelle 158, mittels einer Scansteuerleitung 174 mit der Scanvorrichtung 164 und mittels einer Positionierungsleitung 176 mit der Mikroskoppositionierung 166 verbunden sein. Alternativ oder zusätzlich zu der zentralen Steuerung 120 kann die Vorrichtung 110 wiederum jedoch auch eine separate Steuerung für die optische Vorrichtung 116 umfassen, beispielsweise eine Mikroskopsteuerung.

Es sei darauf hingewiesen, dass die in Figur 1 beispielhaft dargestellte Vorrichtung 110 auch auf verschiedene Weise abgewandelt werden kann. So können beispielsweise ein oder mehrere zusätzliche Komponenten vorgesehen sein, beispielsweise optische Komponenten, wie beispielsweise Spiegel, Linsen, Blenden, Filter, Strahlteiler oder ähnliches. Weiterhin können die Lichtquellen 158 und Laser 142 ganz oder teilweise zusammengefasst sein oder weitere, nicht dargestellte Lichtquellen und/oder Laser umfassen, beispielsweise um zusätzliche Wellenlängen einzukoppeln. Weiterhin kann auch die Kamera 156 auch als eine andere Art von Detektor ausgestaltet sein, beispielsweise unter Verwendung mehrerer Detektoren. Beispielsweise können für einen Kalibriervorgang und einen Bildaufnahmevorgang unterschiedliche Kameras 156 und unterschiedliche Strahlengänge verwendet werden. Auch ist die zentrale Steuerung 120 in Figur 1 lediglich symbolisch angedeutet. Diese kann beispielsweise, wie oben beschrieben, eine oder mehrere Datenverarbeitungsvorrichtungen umfassen. Die zentrale Steuerung 120 ist dabei in Figur 1 als eine einzelne, zentralisierte Steuerung dargestellt. Es ist jedoch analog auch eine Ausgestaltung in Form mehrerer, vorzugsweise miteinander verbundener Steuerungen möglich, beispielsweise einer separaten Steuerung für das Rasterkraftmikroskop 114 und einer zweiten Steuerung für die optische Vorrichtung 116. Auch andere Ausgestaltungen sind denkbar. Weiterhin kann die zentrale Steuerung 120 beispielsweise noch entsprechende Ein- und Ausgabegeräte umfassen, wie beispielsweise eine Tastatur, einen Bildschirm, Schnittstellen oder ähnliches.

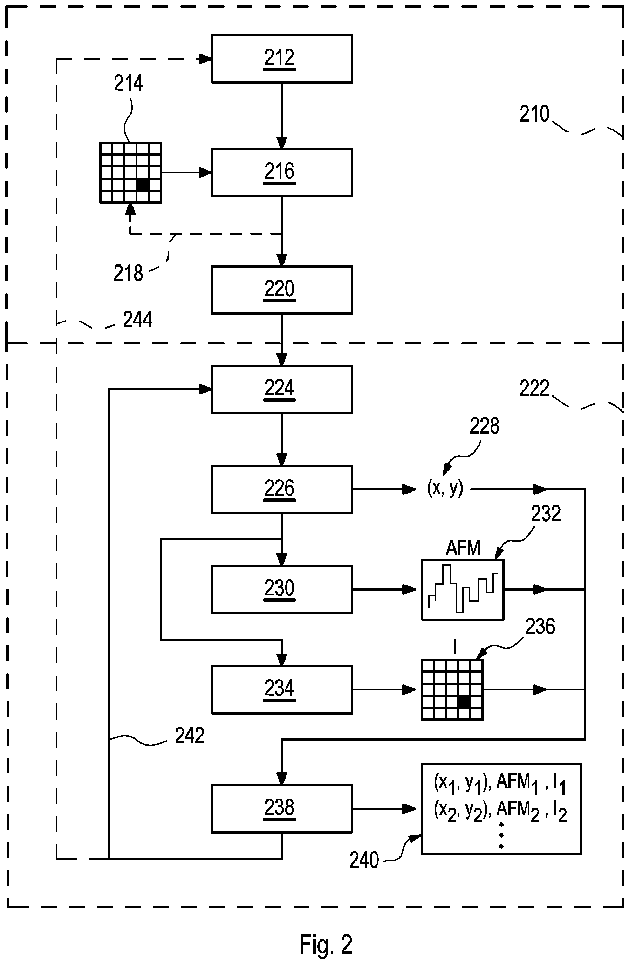

Mittels der in Figur 1 dargestellten Vorrichtung 110 ist ein erfindungsgemäßes Verfahren zur Abbildung der mindestens einen Probe 112 durchführbar. Allgemein wird dabei unter einem Verfahren zur Abbildung einer Probe ein Verfahren verstanden, bei welchem strukturelle und/oder materielle Informationen über die Probe als Funktion eines Ortes innerhalb und/oder auf der Probe gewonnen werden. Ein Beispiel eines derartigen Verfahrens ist als schematischer Ablaufplan in Figur 2 dargestellt. Es sei darauf hingewiesen, dass die in diesem Ablaufplan gezeigten Verfahrensschritte vorteilhaft, jedoch nicht notwendigerweise in der dargestellten Reihenfolge durchgeführt werden, und dass gegebenenfalls weitere, in Figur 2 nicht dargestellte Verfahrensschritte durchgeführt werden können. Weiterhin können einzelne oder mehrere der in Figur 2 dargestellten Verfahrensschritte auch zeitlich parallel, zeitlich überlappend oder ganz oder teilweise einzeln oder in Gruppen wiederholt durchgeführt werden. Neben dem in Figur 2 dargestellten Verfahren lassen sich mittels der Vorrichtung 110 in Figur 1 jedoch auch andere Verfahrensvarianten durchführen.

Vor Beginn des in Figur 2 dargestellten Verfahrens sollte zunächst ein relevanter Bildbereich, in welchem die Rasterkraftmikroskopie stattfindet, in den Bildausschnitt, welcher durch die Kamera 156 erfasst wird, gefahren werden. Dieser interessierende Bereich (Region of Interest, ROI) kann beispielsweise eingestellt werden, indem mittels der Steuerung 120 über die Mikroskoppositionierung 166 das konfokale Laserscanmikroskop 118 entsprechend verfahren wird.

Anschließend kann ein Kalibrierschritt gestartet werden, welcher in Figur 2 symbolisch mit der Bezugsziffer 210 bezeichnet ist. Bei diesem Kalibrierschritt, dessen Start mit der Bezugsziffer 212 bezeichnet ist, wird zunächst mittels der Kamera 156, beispielsweise unter Verwendung eines Reflexionsverfahrens und der Kalibrierlichtquelle 158, ein Bildausschnitt in Form eines Kalibrierbilds aufgenommen. Dieses Kalibrierbild bzw. die Aufnahme dieses Kalibrierbilds ist in Figur 2 symbolisch mit der Bezugsziffer 214 bezeichnet.

Anschließend wird in einem Bilderkennungsschritt 216 in dem Kalibrierbild 214 die Position der Probenspitze 126 erkannt. Dies kann beispielsweise automatisch erfolgen, beispielsweise mit einer Bilderkennungssoftware, beispielsweise wiederum unter Verwendung der zentralen Steuerung 120 als Kalibriervorrichtung 122. Alternativ oder zusätzlich kann der Bilderkennungsschritt 216 jedoch auch manuell durchgeführt werden, beispielsweise indem ein Benutzer der Vorrichtung 110 einen Cursor an der Stelle des Kalibrierbildes positioniert, an welcher er die Probenspitze 126 erkennt. Auch eine iterative Durchführung des Bilderkennungsschritts 216 und der Aufnahme des Kalibrierbilds 214 ist möglich, was in Figur 2 mit der Bezugsziffer 218 angedeutet ist. Auf diese Weise kann beispielsweise die Position der Probenspitze 126 iterativ möglichst genau bestimmt werden.

Nach dem Bilderkennungsschritt 216 wird der Laserstrahl 144 des Lasers 142 in einer vorgegebenen Ausrichtung zu der Position der Probenspitze 126 auf der Probe 112 positioniert. Diese Positionierung kann beispielsweise automatisch erfolgen, nachdem die Probenspitze 126 identifiziert wurde. Die vorgegebene Ausrichtung erfolgt vorzugsweise derart, dass der Laserstrahl 144 genau auf der Probenspitze 126 positioniert wird. Alternativ oder zusätzlich ist jedoch auch eine andere Ausrichtung, beispielsweise eine Ausrichtung in einem festen Abstand in x- und y-Richtung, denkbar. Die Positionierung des Laserstrahls 144 kann beispielsweise unter Verwendung der Scanvorrichtung 164 erfolgen, also beispielsweise durch eine entsprechende Positionierung von Galvanometerspiegeln der Scanvorrichtung 164. Anschließend werden diese Galvanometerspiegel vorzugsweise nicht mehr verändert, oder nur noch verändert, um beispielsweise den Laserstrahl 144 nachzuführen, beispielsweise im Rahmen eines Korrekturvorgangs zum Ausgleich von Positionsdrift. Die Ausrichtung des Laserstrahls 220, welche somit einen Bildaufnahmebereich der optischen Vorrichtung 116 innerhalb und/oder auf der Probe 112 vorgibt, ist in Figur 2 symbolisch mit der Bezugsziffer 220 bezeichnet. Diese Ausrichtung 220 wird üblicherweise auch als "Beam Park" bezeichnet, da vorzugsweise der Laserstrahl 144 auf der Probenspitze 126 "geparkt" wird. Mit diesem Ausrichtungsschritt 220 ist der Kalibrierschritt 210 grundsätzlich abgeschlossen. Es sei darauf hingewiesen, dass der Kalibrierschritt 210 auch noch andere Verfahrensschritte umfassen kann. Beispielsweise kann, zum Beispiel vor Aufnahme des Kalibrierbildes in Schritt 214, zusätzlich ein Übersichtsbild aufgenommen werden, beispielsweise in einem Durchlichtverfahren, um die Region of Interest auszuwählen. Auch weitere, in Figur 2 nicht dargestellte Verfahrensschritte, sind grundsätzlich denkbar.

An den Kalibrierschritt 210 schließt sich bei dem in Figur 2 dargestellten Verfahren mindestens ein Bildaufnahmeschritt an, welcher in Figur 2 symbolisch mit der Bezugsziffer 222 bezeichnet ist. Dieser Bildaufnahmeschritt 222 wird in Schritt 224 gestartet. Die Steuerung des Bildaufnahmeschritts 222 kann beispielsweise wiederum durch die zentrale Steuerung 120 erfolgen. Bei dem Bildaufnahmeschritt 222 wird zunächst in Schritt 226 die Probe 112 positioniert. Diese Positionierung kann beispielsweise mittels des Positionierungssystems 138 erfolgen, beispielsweise wiederum gesteuert über die zentrale Steuerung 120 und/oder eine separate Positionierungssteuerung. Das Positionierungssystem 138 in Figur 1 kann beispielsweise einen piezoelektrisch gesteuerten Probentisch umfassen und/oder einen Probentisch mit einer anderen Art von Aktuatoren. Das Positionierungssystem 138 erzeugt dabei Positionssignale, welche in Figur 2 symbolisch mit der Bezugsziffer 228 und "(x, y)" bezeichnet sind. Zur elektronischen Anbindung der optischen Vorrichtung 116 an das Rasterkraftmikroskop 114 können beispielsweise diese Positionssignale 228 des Positionierungssystems 138 sowie die notwendigen Steuersignale (zum Beispiel Bildbeginn, Zeilenbeginn, Zeilenende) an die zentrale Steuerung 120 und/oder die optische Vorrichtung 116 übergeben werden. Die Positionssignale 228 stellen beispielsweise eine gemeinsame Ortsinformation des jeweiligen Punktes und/oder Bereichs dar, an welchem gerade mittels des Rasterkraftmikroskops 114 und der optischen Vorrichtung 116 gemessen wird.

Nach der Positionierung der Probe 226 wird dann in Verfahrensschritt 230 eine Messinformation des Rasterkraftmikroskops 114 aufgenommen. Diese Messinformation ist in Figur 2 symbolisch mit der Bezugsziffer 232 und "AFM" bezeichnet. Weiterhin wird in Schritt 234 mindestens eine Messinformation der optischen Vorrichtung 116 aufgenommen. Beispielsweise kann diese Messinformation eine Detektorinformation eines Pixels der Kamera 156 umfassen, welche der Position der Probenspitze 126 entspricht. Beispielsweise kann es sich hierbei um einen Graustufenwert eines Pixels handeln. Alternativ oder zusätzlich kann jedoch, wie oben beschrieben, auch ein unterschiedlicher Detektor für die Aufnahme der Messinformation der optischen Vorrichtung 116 verwendet werden, beispielsweise ein einzelner Detektor und/oder ein Zeilen- oder Spalten-Array. Zur zeitlichen Synchronisation der Aufnahme der Messinformation 236, beispielsweise im Rahmen eines Scan-Verfahrens (siehe unten) kann beispielsweise wiederum ein Signal der zentralen Steuerung 120, ein Signal des Positionierungssystems 138, ein Signal des Rasterkraftmikroskops 114 oder eine Kombination dieser Signale verwendet werden. Zu diesem Zweck kann beispielsweise ein so genanntes "Pixel-Clock" oder ein "Pixel-Read-Out" eingesetzt werden. Alternativ oder zusätzlich kann auch die optische Vorrichtung 116 als maßgebliche Trigger-Vorrichtung verwendet werden und beispielsweise die Positionierung und/oder die Aufnahme der Messinformationen des Rasterkraftmikroskops 114 triggern.

In Figur 2 sind symbolisch die Aufnahmeschritte 230 und 234 untereinander dargestellt. Es sei darauf hingewiesen, dass die zeitliche Reihenfolge dieser Aufnahmeschritte jedoch auch vertauscht sein kann und/oder dass diese Aufnahmeschritte 230, 234 auch ganz oder teilweise zeitlich parallel erfolgen kann. Die auf diese Weise gewonnenen Messinformationen 232, 236 werden in Verfahrensschritt 238 in Form von Bilddaten (in Figur 2 symbolisch mit Bezugsziffer 240 bezeichnet) abgespeichert. Zu diesem Zweck können beispielsweise die Positionssignale 228 mit den zugehörigen Messinformationen 232 des Rasterkraftmikroskops 214 zusammengefasst werden und mit zugehörigen Messinformationen 236 der optischen Vorrichtung 116. Dieses Zusammenfassen kann zu getrennten Bilddaten 240 erfolgen, also beispielsweise getrennte Bilddaten für das Rasterkraftmikroskop 114 und für die optische Vorrichtung 116, oder, wie in Figur 2 angedeutet, in Form von gemeinsamen Bilddaten. In jedem Fall sind die Messinformationen 232, 236 des Rasterkraftmikroskops 114 bzw. der optischen Vorrichtung 116 jedoch derart räumlich synchronisiert, dass diese über die gemeinsame Ortsinformation in Form der Positionssignale 228 einander zugeordnet werden können. Die Positionssignale 228 können dementsprechend beispielsweise unmittelbar zur Bildgenerierung verwendet werden. Auch eine Beleuchtungssteuerung der Beleuchtung des Laserscanmikroskops 118 kann über diese Positionssignale 228 und/oder die Signale des Positionierungssystems 138 erfolgen, ähnlich zu einem normalen Laserscanprozess.

In Figur 1 werden die Positionssignale des Positionierungssystems 138 symbolisch an die zentrale Steuerung 120 übergeben. Diese Übergabe kann jedoch, alternativ oder zusätzlich, auch unmittelbar an das konfokale Laserscanmikroskop 118 bzw. die optische Vorrichtung 116 erfolgen. In jedem Fall ist es bevorzugt, wenn abgeschirmte Kabel verwendet werden, beispielsweise für die Probenpositionierungsleitung 140. Weiterhin können beispielsweise ADC-Wandler und Treiberbausteine verwendet werden, welche vergleichsweise nahe an der Elektronik des Rasterkraftmikroskops 114 platziert sind, um elektrostatische Entladung (ESD) oder elektromagnetische Störungen (EMV) zu vermeiden.

Nach der Aufnahme der Messinformationen in den Schritten 230 bzw. 234 und/oder nach Abspeichern der Messinformationen in Schritt 238 kann dann, beispielsweise im Rahmen eines Scans 242, erneut zu Verfahrensschritt 224 zurückgekehrt werden, um den Bildaufnahmeschritt 222 erneut zu starten. Zu diesem Zweck kann die Probe erneut positioniert werden, und die nachfolgenden Verfahrensschritte können erneut durchgeführt werden. Auf diese Weise kann die Probe 112, beispielsweise im Rahmen eines vorgegebenen Rasters, punktweise abgerastert werden, indem der Probentisch 136 entsprechend verfahren bzw. neu positioniert wird. Wie oben beschrieben, kann alternativ oder zusätzlich auch eine Repositionierung des Rasterkraftmikroskops 114 und/oder der optischen Vorrichtung 116 erfolgen. Auf diese Weise kann, mit jeder Iteration des Bildaufnahmeschritts 222, der Satz der Bilddaten 240 entsprechend um eine der in Figur 2 angedeuteten Zeilen erweitert werden, so dass sich schließlich ein gesamtes Bild der Probe 112 bzw. eines interessierenden Ausschnitts dieser Probe 112, ergibt. Diese Bilddaten 240 können anschließend getrennt oder gemeinsam dargestellt werden, also beispielsweise im Rahmen eines getrennten Rasterkraftmikroskopiebildes und eines Laserscanbildes, oder auch im Rahmen eines gemeinsamen, zum Beispiel überlagerten Bildes. Zu diesem Zweck kann beispielsweise eine Ausgabe auf einem Monitor erfolgen, oder eine Ausgabe in eine Datei.

Mit der Bezugsziffer 244 ist in Figur 2 eine Alternative eines Scanverfahrens dargestellt, bei welcher nach jedem Bildaufnahmeschritt 222 oder beispielsweise nach einer vorgegebenen Anzahl von Bildaufnahmeschritten 222 wieder ein Kalibrierschritt 210 durchgeführt wird. Dies kann beispielsweise bei einem Stage-Scan-Verfahren genutzt werden, um eine Drift beispielsweise der Mikroskoppositionierung 166 relativ zur Probenspitze 126 auszugleichen. Hierbei können beispielsweise elektronische Driften oder thermische Driften eine Rolle spielen, da typische Rasterkraftmikroskopieaufnahmen bis zu einigen Minuten dauern können. Auch im Rahmen eines Tip-Scan-Verfahrens, bei welchem der Laserstrahl 144 beispielsweise der Position der Probenspitze 126 nachgeführt wird, kann eine derartige Positionskontrolle bzw. Positionskorrektur gemäß Schritt 244 nach jedem Bildaufnahmeschritt 222 und/oder nach beispielsweise einer vorgegebenen Anzahl von Bildaufnahmeschritten 222, erforderlich bzw. sinnvoll sein.

Wie oben beschrieben, kann die optische Vorrichtung 116 auch auf andere Weise als die in Figur 1 gezeigte Weise ausgestaltet sein. Ein Ausführungsbeispiel mit einer alternativen optischen Vorrichtung 116 ist in Figur 3 dargestellt. Dabei ist wiederum eine Probe 112 auf einem Probentisch 136 mit einem Positionierungssystem 138 vorgesehen, welche mittels eines Rasterkraftmikroskops 114 untersucht werden kann. Bezüglich der möglichen Ausgestaltungen dieses Rasterkraftmikroskops 114 kann beispielsweise auf die Beschreibung zu Figur 1 verwiesen werden.

Wiederum ist außerdem eine optische Vorrichtung 116 vorgesehen, welche in diesem Ausführungsbeispiel ebenfalls wieder auf der dem Rasterkraftmikroskop 114 gegenüberliegenden Seite der Probe 112 angeordnet ist. Auch eine andere Anordnung dieser optischen Vorrichtung 116 ist jedoch möglich. Die optische Vorrichtung 116 umfasst in diesem Ausführungsbeispiel eine erste optische Vorrichtung 310 mit einer ersten Kamera 312, und eine zweite optische Vorrichtung 314 mit einer zweiten Kamera 316. Die beiden Kameras 312, 316 können jedoch auch wieder zu einer einzigen Kamera zusammengefasst sein, beispielsweise ähnlich zu der Anordnung gemäß Figur 1. Die erste optische Vorrichtung 310 dient der Durchführung des Kalibrierschritts, wohingegen die zweite optische Vorrichtung 314 der Durchführung des Bildaufnahmeschritts dient.

Weiterhin ist mindestens eine Lichtquelle 318 vorgesehen, welche in Figur 3 lediglich angedeutet ist. Diese Lichtquelle 318 kann beispielsweise zur Erzeugung von Anregungslicht 320 und/oder zur Erzeugung von Kalibrierlicht 160 dienen. Es können auch unterschiedliche Lichtquellen 318 zu diesem Zweck vorgesehen sein und/oder an anderen Stellen in der optischen Vorrichtung 116 positionierte Lichtquellen. Der gesamte Strahlengang ist, wie auch in Figur 1, in Figur 3 lediglich symbolisch angedeutet.

Zur Durchführung des Kalibrierschritts wird das Kalibrierlicht 160 über die Überlagerungsvorrichtung 148 auf die Probe 112 gelenkt. Von dort bzw. von der Probenspitze 126 reflektiertes Licht wird mittels eines Strahlteilers 322, beispielsweise wiederum eines dichroitischen Spiegels und/oder eines Polarisationsstrahlteilers, auf die erste Kamera 312 gelenkt. Dieser erste Lichtanteil, welcher beispielsweise eine Wellenlänge λ 1 (bzw. einen ersten Wellenlängenbereich) aufweisen kann, ist in Figur 3 mit der Bezugsziffer 324 bezeichnet. In dem Kalibrierschritt kann beispielsweise, wie in Figur 2 beschrieben, mittels der ersten Kamera 312 ein Kalibrierbild 214 aufgenommen werden. In diesem Kalibrierbild 214 kann, beispielsweise wiederum automatisch und/oder manuell, eine Position der Probenspitze 126 bestimmt werden, was in Figur 3 durch den dunkel dargestellten Pixel im Kalibrierbild 214 angedeutet ist. Damit ist bekannt, an welcher Stelle sich die Probenspitze 126 in dem Bildausschnitt, welcher von der optischen Vorrichtung 116 erfasst wird, befindet.

Weiterhin wird von dem von der Probe 112 hin zur optischen Vorrichtung 116 emittierten bzw. reflektierten Lichtanteil an dem Strahlteiler 322 ein zweiter Lichtanteil 326 abgespaltet, welcher beispielsweise in einem Wellenlängenbereich λ₂ liegen kann. Beispielsweise kann es sich hierbei um Fluoreszenzlicht 152 handeln. Mittels dieses zweiten Lichtanteils 326 kann mit der zweiten Kamera 316 beispielsweise in dem Bildaufnahmeschritt eine Messinformation 236 aufgenommen werden. Beispielsweise kann diese Messinformation 236 wiederum ein vollständiges Kamerabild umfassen. Da die räumliche Ausrichtung des Kalibrierbildes 214 und der Messinformation 236 relativ zueinander aufgrund der ortsfesten Anordnung der optischen Vorrichtung 110 bekannt sind, kann der bekannten Information über die Position der Probenspitze 126 in dem Kalibrierbild 214 nunmehr eine bestimmte Position in der Messinformation 236 zugeordnet werden, welche in Figur 3 ebenfalls durch ein dunkles Pixel dargestellt ist. Anstelle eines einzelnen Pixels kann es sich dabei jeweils, in den Kalibrierbildern 214 und in der Messinformation 236, auch um eine Mehrzahl von Pixeln handeln. Der Inhalt dieses dunkel dargestellten Pixels in der Messinformation 236 ist die eigentliche Messinformation am Ort der Probenspitze 126, wohingegen der übrige Inhalt des Kamerabildes der zweiten Kamera 316 beispielsweise zur Datenreduktion verworfen werden kann. Der Inhalt dieses relevanten Pixels kann nun beispielsweise als eigentliche Messinformation 236 an die zentrale Steuerung 120 übergeben werden, so dass wiederum die Bilddaten 240 erzeugt werden können, analog beispielsweise zu der Beschreibung in Figur 2.

Die alternative Ausgestaltung der Vorrichtung 110 in Figur 3 zeigt, dass die in dem mindestens einen Kalibrierschritt die Wahl der Ausrichtung des Bildaufnahmebereichs (das heißt beispielsweise in Figur 3 das symbolisch geschwärzte Pixel im Kamerabild der zweiten Kamera 316) nicht notwendigerweise durch eine tatsächliche physikalische Positionierung erfolgen muss, sondern auch "virtuell" erfolgen kann. Während bei dem Ausführungsbeispiel in Figur 1 der "Beam Park", also die Positionierung des Laserstrahls 144, physikalisch auf der Probenspitze 126 bzw. relativ zu dieser Probenspitze 126 erfolgt, erfolgt die Auswahl des Bildaufnahmebereichs bei dem Ausführungsbeispiel gemäß Figur 3 virtuell, indem lediglich aus einer Vielzahl von Bildaufnahmebereichen (das heißt dem Kamerabild der zweiten Kamera 316) der Bildaufnahmebereich, welcher der Position der Probenspitze 126 entspricht, ausgewählt wird, um als Messinformation 236 verwendet zu werden. In beiden Fällen, welche von dem erfindungsgemäßen Verfahren umfasst sein sollen, erfolgt jedoch eine räumlich synchronisierte Aufnahme von Daten des Rasterkraftmikroskops 114 und der optischen Vorrichtung 116.

**Bezugszeichenliste**

| | | | |
|---|---|---|---|
| 110 | Vorrichtung | 210 | Kalibrierschritt |
| 112 | Probe | 212 | Start Kalibrierschritt |
| 114 | Rasterkraftmikroskop | 214 | Kalibrierbild aufnehmen |
| 116 | optische Vorrichtung | 216 | Bilderkennungsschritt |
| 118 | konfokales Laserscanmikroskop | 218 | iterative Bilderkennung |
| 120 | zentrale Steuerung | 220 | Ausrichtung Laserstrahl |
| 122 | Kalibriervorrichtung | 222 | Bildaufnahmeschritt |
| 123 | Bildaufnahmesteuerung | 224 | Start Bildaufnahmeschritt |
| 124 | Hebelarm | 226 | Probe positionieren |
| 126 | Probenspitze | 228 | Positionssignale |
| 128 | AFM-Steuerleitungen | 230 | Messinformation Rasterkraftmikroskop aufnehmen |
| | | | |
| 130 | Laser | 232 | Messinformation Rasterkraftmikroskop |
| 132 | Laserstrahl | 234 | Messinformation optische Vorrichtung aufnehmen |
| 134 | Photodiode | | |
| 136 | Probentisch | 236 | Messinformation optische Vorrichtung aufnehmen |
| 140 | Probenpositionierungsleitung | | |
| 142 | Laser | 238 | Abspeichern Messinformationen |
| 144 | Laserstrahl | 240 | Bilddaten |
| 146 | Anregungsblende | 242 | Scan |
| 148 | Überlagerungsvorrichtung | 244 | Scan mit Positionskontrolle |
| 150 | Mikroskopobjektiv | | |
| 152 | Fluoreszenzlicht | 310 | erste optische Vorrichtung |
| 154 | Detektionsblende | 312 | erste Kamera |
| 156 | Kamera | 314 | zweite optische Vorrichtung |
| 158 | Kalibrierlichtquelle | 316 | zweite Kamera |
| 160 | Kalibrierlichtstrahl | 318 | Lichtquelle |
| 162 | Überlagerungsvorrichtung | 320 | Anregungslicht |
| 164 | Scanvorrichtung | 322 | Strahlteiler |
| 166 | Mikroskoppositionierung | 324 | erster Lichtanteil |
| 168 | Kameraleitung | 326 | zweiter Lichtanteil |
| 170 | Lasersteuerleitung | | |
| 172 | Kalibrierlichtleitung | | |
| 174 | Scansteuerleitung | | |
| 176 | Positionierungsleitung | | |

## Patentansprüche

1. Verfahren zur Abbildung mindestens einer Probe (112), wobei mindestens ein Rasterkraftmikroskopieverfahren und mindestens ein optisches Bildgebungsverfahren verwendet werden, wobei bei dem Rasterkraftmikroskopieverfahren mindestens eine Probenspitze (126) über der Probe (112) positioniert wird, wobei in mindestens einem Kalibrierschritt mindestens eine Position der Probenspitze (126) mittels des optischen Bildgebungsverfahrens erkannt wird, wobei mindestens ein Bildaufnahmebereich des optischen Bildgebungsverfahrens in einer vorgegebenen Ausrichtung zu der Position der Probenspitze (126) gewählt wird, wobei in mindestens einem Bildaufnahmeschritt eine räumlich synchronisierte Aufnahme von Daten mittels des Rasterkraftmikroskopieverfahrens und mittels des optischen Bildgebungsverfahrens erfolgt, **dadurch gekennzeichnet dass** das optische Bildgebungsverfahren mindestens eine erste optische Vorrichtung (310) und mindestens eine von der ersten optischen Vorrichtung (310) zumindest teilweise getrennte zweite optische Vorrichtung (314) umfasst, wobei die erste optische Vorrichtung (310) für den Kalibrierschritt verwendet wird und wobei die zweite optische Vorrichtung (314) für den Bildaufnahmeschritt verwendet wird.

2. Verfahren nach dem vorhergehenden Anspruch, wobei der mindestens eine Bildaufnahmeschritt ein synchronisiertes Scanverfahren umfasst, wobei nacheinander verschiedene Punkte und/oder Bereiche der Probe (112) erfasst, insbesondere abgerastert, werden.

3. Verfahren nach dem vorhergehenden Anspruch, wobei in dem Scanverfahren mindestens eines der folgenden Verfahren verwendet wird:
- ein Stage-Scan-Verfahren, bei welchem in dem Bildaufnahmeschritt die Probenspitze (126) und zumindest eine der optischen Vorrichtungen (310, 314) zur Durchführung des optischen Bildgebungsverfahrens im Wesentlichen ortsfest belassen werden, wobei die Probe (112) räumlich bewegt wird;
- ein Tip-Scan-Verfahren, bei welchem in dem Bildaufnahmeschritt die Probenspitze (126) und zumindest eine der optischen Vorrichtungen (310, 314) zur Durchführung des optischen Bildgebungsverfahrens räumlich bewegt werden, wobei die Probe (112) vorzugsweise ortsfest belassen wird.

4. Verfahren nach einem der beiden vorhergehenden Ansprüche, wobei zu jedem Punkt und/oder Bereich Bilddaten erzeugt werden, wobei die Bilddaten mindestens eine gemeinsame Ortsinformation des Punktes und/oder Bereichs, mindestens eine Messinformation des Rasterkraftmikroskopieverfahrens und mindestens eine Messinformation des optischen Bildgebungsverfahrens umfassen.

5. Verfahren nach dem vorhergehenden Anspruch, wobei die gemeinsame Ortsinformation eine Positionierungsinformation mindestens eines Positionierungssystems zur Positionierung der Probe (112) und/oder zur Positionierung der Probenspitze (126) umfasst.

6. Verfahren nach einem der beiden vorhergehenden Ansprüche, wobei die Messinformation des optischen Bildgebungsverfahrens einem Bildpunkt oder einer Mehrzahl von Bildpunkten entspricht, welche in dem Bildaufnahmebereich an der Position der Probenspitze (126) angeordnet sind.

7. Verfahren nach einem der vorhergehenden Ansprüche, wobei in dem Kalibrierschritt mittels des optischen Bildgebungsverfahrens mindestens ein Bildausschnitt aufgenommen wird, wobei die Position der Probenspitze (126) in dem Bildausschnitt identifiziert wird.

8. Verfahren nach dem vorhergehenden Anspruch, wobei die Identifikation der Probenspitze (126) zumindest teilweise automatisch, insbesondere mittels mindestens eines Bilderkennungsverfahrens, erfolgt.

9. Verfahren nach dem vorhergehenden Anspruch, wobei das Bilderkennungsverfahren iterativ mit mindestens einem jeweils vergrößerten Bildausschnitt erfolgt.

10. Verfahren nach einem der drei vorhergehenden Ansprüche, wobei die Identifikation der Probenspitze (126) zumindest teilweise manuell erfolgt, insbesondere durch manuelles Positionieren mindestens eines Zeigerelements, insbesondere eines Cursors, in der Position der Probenspitze (126) in dem Bildausschnitt.

11. Verfahren nach einem der vorhergehenden Ansprüche, wobei die Synchronisation der Aufnahme der Daten mittels mindestens eines der folgenden Verfahren erfolgt:
- eine Steuerung des Rasterkraftmikroskopieverfahrens triggert eine Datenaufnahme des optischen Bildgebungsverfahrens und/oder eine Beleuchtung des optischen Bildgebungsverfahrens;
- eine Steuerung des optischen Bildgebungsverfahrens triggert eine Datenaufnahme des Rasterkraftmikroskopieverfahrens;
- eine zentrale Steuerung triggert eine Datenaufnahme des Rasterkraftmikroskopieverfahrens und des optischen Bildgebungsverfahrens.

12. Verfahren nach einem der vorhergehenden Ansprüche, wobei der Kalibrierschritt wiederholt durchgeführt wird, um die Ausrichtung des Bildaufnahmebereichs zu der Position der Probenspitze (126) zu kontrollieren und/oder zu korrigieren.

13. Verfahren nach dem vorhergehenden Anspruch, wobei jedem Bildgebungsschritt mindestens ein Kalibrierschritt zugeordnet ist.

14. Verfahren nach Anspruch 1, wobei die erste optische Vorrichtung (310) und die zweite optische Vorrichtung (314) unterschiedliche optische Wellenlängenbereiche und/oder unterschiedliche optische Aufnahmetechniken verwenden, insbesondere eine Reflexionslichttechnik und eine Fluoreszenztechnik.

15. Vorrichtung (110) zur Abbildung mindestens einer Probe (112), umfassend mindestens ein Rasterkraftmikroskop (114) zur Untersuchung der Probe (112) mittels mindestens einer Probenspitze (126), weiterhin umfassend mindestens eine erste optische Vorrichtung (310) und mindestens eine von der ersten optischen Vorrichtung (310) zumindest teilweise getrennte zweite optische Vorrichtung (314) zur Untersuchung der Probe (112) mittels mindestens eines optischen Bildgebungsverfahrens, wobei die zweite optische Vorrichtung (314) für einen Bildaufnahmeschritt verwendet wird, weiterhin umfassend mindestens eine Kalibriervorrichtung (122), wobei die Kalibriervorrichtung (122) eingerichtet ist, um mindestens eine Position der Probenspitze (126) mittels des optischen Bildgebungsverfahrens mit Hilfe der ersten optischen Vorrichtung (310) zu ermitteln und mindestens einen Bildaufnahmebereich des optischen Bildgebungsverfahrens in einer vorgegebenen Ausrichtung zu der Position der Probenspitze (126) einzustellen, weiterhin umfassend mindestens eine Bildaufnahmesteuerung (123) zur räumlich synchronisierten Aufnahme von Daten mittels des Rasterkraftmikroskops (114) und mittels der ersten optischen Vorrichtung (116).

16. Vorrichtung (110) nach dem vorhergehenden Anspruch, wobei die Vorrichtung (110) eingerichtet ist, um ein Verfahren nach einem der vorhergehenden Verfahrensansprüche durchzuführen.

17. Vorrichtung (110) nach einem der beiden vorhergehenden Ansprüche, wobei das Rasterkraftmikroskop (114) eingerichtet ist, um in mindestens einem der folgenden Betriebsmodi zu arbeiten: einem Kontaktmodus; einem Nicht-Kontaktmodus; einem Tapping-Modus.

18. Vorrichtung (110) nach einem der vorhergehenden Vorrichtungsansprüche, wobei die optische Vorrichtung (116) mindestens eine der folgenden Vorrichtungen umfasst: ein Mikroskop, insbesondere ein konfokales Mikroskop, ein Lasermikroskop, ein konfokales Lasermikroskop (118), ein Fluoreszenzmikroskop, ein Scanmikroskop, ein konfokales Scanmikroskop, ein Transmissionsmikroskop; einen Detektor, insbesondere einen ein Detektorarray und/oder eine Kamera umfassenden Detektor, insbesondere eine Kamera (156; 312, 316), eine CCD-Kamera, eine EMCCDKamera, einen Photomultiplier, eine Photodiode, eine schnelle Photodiode.

19. Vorrichtung (110) nach einem der vorhergehenden Vorrichtungsansprüche, wobei zumindest eine der optischen Vorrichtungen (310, 314) eingerichtet ist, um mindestens eines der folgenden optischen Bildgebungsverfahren durchzuführen: ein Fluoreszenzverfahren, insbesondere ein Laserlicht-induziertes Fluoreszenzverfahren; ein Mehrphotonen-Absorptionsverfahren; ein STED-Verfahren; ein PALM-Verfahren; ein RESOLFTVerfahren; ein PAM-Verfahren.

20. Vorrichtung (110) nach einem der vorhergehenden Vorrichtungsansprüche, wobei die optischen Vorrichtungen (310, 314) und das Rasterkraftmikroskop (114) auf gegenüberliegenden Seiten der Probe (112) angeordnet sind.

## Claims

1. A method for imaging at least one sample (112), wherein at least one atomic force microscopy method and at least one optical imaging method are used, wherein in the atomic force microscopy method at least one probe tip (126) is positioned above the sample (112), wherein in at least one calibration step at least one position of the probe tip (126) is identified by means of the optical imaging method, wherein at least one image capturing area of the optical imaging method is selected in a predetermined orientation relative to the position of the probe tip (126), wherein in at least one image capturing step a spatially synchronized acquisition of data by means of the atomic force microscopy method and by means of the optical imaging method is carried out, **characterized in that** the optical imaging method comprises at least one first optical device (310) and at least one second optical device (314) at least partially separated from the first optical device (310), wherein the first optical device (310) is used for the calibration step and wherein the second optical device (314) is used for the image capturing step.

2. The method according to the preceding claim, wherein the at least one image capturing step comprises a synchronized scanning method, wherein different points and/or areas of the sample (112) are successively detected, in particular scanned.

3. The method according to the preceding claim, wherein in the scanning method at least one of the following methods is used:
- a stage scan method in which in the image capturing step the probe tip (126) and at least one of the optical devices (310, 314) are substantially left stationary for carrying out the optical imaging method, wherein the sample (112) is spatially moved;
- a tip scan method in which in the image capturing step the probe tip (126) and at least one of the optical devices (310, 314) are spatially moved for carrying out the optical imaging method, wherein the sample (112) is preferably left stationary.

4. The method according to one of the two preceding claims, wherein for each point and/or area image data are generated, wherein the image data comprise at least one common location information of the point and/or area, at least one measurement information of the atomic force microscopy method and at least one measurement information of the optical imaging method.

5. The method according to the preceding claim, wherein the common location information comprises a positioning information of at least one positioning system for positioning the sample (112) and/or for positioning the probe tip (126).

6. The method according to one of the two preceding claims, wherein the measurement information of the optical imaging method corresponds to one pixel or a plurality of pixels, which are arranged in the image capturing area at the position of the probe tip (126).

7. The method according to one of the preceding claims, wherein in the calibration step at least one image detail is captured by means of the optical imaging method, wherein the position of the probe tip (126) in the image detail is identified.

8. The method according to the preceding claim, wherein the identification of the probe tip (126) takes place at least partially automatically, in particular by means of at least one image recognition method.

9. The method according to the preceding claim, where the image recognition method is performed iteratively with at least one image detail enlarged in each case.

10. The method according to one of the three preceding claims, wherein the identification of the probe tip (126) takes place at least partially manually, in particular by manual positioning of at least one pointer element, in particular a cursor, in the position of the probe tip (126) in the image detail.

11. The method according to one of the preceding claims, wherein the synchronization of the data acquisition takes place by means of at least one of the following methods:
- a control of the atomic force microscopy method triggers a data acquisition of the optical imaging method and/or an illumination of the optical imaging method;
- a control of the optical imaging method triggers a data acquisition of the atomic force microscopy method;
- a central control triggers a data acquisition of the atomic force microscopy method and of the optical imaging method.

12. The method according to one of the preceding claims, wherein the calibration step is repeatedly performed in order to control and/or to correct the orientation of the image capturing area relative to the position of the probe tip (126).

13. The method according to the preceding claim, wherein at least one calibration step is allocated to each imaging step.

14. The method according to claim 1, wherein the first optical device (310) and the second optical device (314) use different optical wavelength ranges and/or different optical capturing techniques, in particular a reflective light technique and a fluorescence technique.

15. A device (110) for imaging at least one sample (112), comprising at least one atomic force microscope (114) for examination of the sample (112) by means of at least one probe tip (126), further comprising at least one first optical device (310) and at least one second optical device (314), at least partially separated from the first optical device (310), for examination of the sample (112) by means of at least one optical imaging method, wherein the second optical device (314) is used for an image capturing step, further comprising at least one calibration device (122), wherein the calibration device (122) is adapted to determine at least one position of the probe tip (126) by means of the optical imaging method with the aid of the first optical device (310) and to adjust at least one image capturing area of the optical imaging method in a predetermined orientation relative to the position of the probe tip (126), further comprising at least one image capturing control (123) for the spatially synchronized acquisition of data by means of the atomic force microscope (114) and by means of the first optical device (116).

16. The device (110) according to the preceding claim, wherein the device (110) is adapted to perform a method according to one of the preceding method claims.

17. The device (110) according to one of the two preceding claims, wherein the atomic force microscope (114) is adapted to operate in at least one of the following operating modes: a contact mode; a noncontact mode; a tapping mode.

18. The device (110) according to one of the preceding device claims, wherein the optical device (116) comprises at least one of the following devices: a microscope, in particular a confocal microscope, a laser microscope, a confocal laser microscope (118), a fluorescence microscope, a scanning microscope, a confocal scanning microscope, a transmission microscope; a detector, in particular a detector comprising a detector array and/or a camera, in particular a camera (156; 312, 316), a CCD camera, an EMCCD camera, a photomultiplier, a photodiode, a fast photodiode.

19. The device (110) according to one of the preceding device claims, wherein at least one of the optical devices (310, 314) is adapted to perform at least one of the following optical imaging methods: a fluorescence method, in particular a laser light induced fluorescence method; a multiphoton absorption method; a STED method; a PALM method; a RESOLFT method; a PAM method.

20. The device (110) according to one of the preceding device claims, wherein the optical devices (310, 314) and the atomic force microscope (114) are arranged on opposite sides of the sample (112).

## Revendications

1. Procédé de représentation d'au moins un échantillon (112) dans lequel, au moins un procédé de microscopie à force atomique et au moins un procédé de formation d'image optique sont utilisés, au moins une pointe de sondage (126) étant positionnée au-dessus de l'échantillon (112) selon le procédé de microscopie à force atomique, au moins une position de la pointe de sondage (126) étant reconnue au moyen du procédé de formation d'image optique au cours d'au moins une étape d'étalonnage, au moins une zone d'acquisition d'image du procédé de formation d'image optique étant sélectionnée dans une orientation prédéfinie par rapport à la position de la pointe de sondage (126), une acquisition synchronisée dans l'espace de données étant réalisée au cours d'au moins une étape d'acquisition d'image au moyen du procédé de microscopie à force atomique et au moyen du procédé de formation d'image optique, **caractérisé en ce que** le procédé de formation d'image optique comprend au moins un premier dispositif optique (310) et au moins un deuxième dispositif optique (314) au moins en partie séparé du premier dispositif optique (310), le premier dispositif optique (310) étant utilisé pour l'étape d'étalonnage et le deuxième dispositif optique (314) étant utilisé pour l'étape d'acquisition d'image.

2. Procédé selon la revendication précédente dans lequel, l'étape ou les étapes d'acquisition d'image comprend un procédé de balayage synchronisé, différents points et/ou zones de l'échantillon (112) étant détectés, en particulier balayés les uns après les autres.

3. Procédé selon les revendications précédentes dans lequel, au moins l'un des procédés suivants est utilisé au cours du procédé de balayage :
- un procédé de balayage par étage, selon lequel, au cours de l'étape d'acquisition d'image, la pointe de sondage (126) et au moins l'un des dispositifs optiques (310, 314) sont laissés sensiblement fixes pour la réalisation du procédé de formation d'image optique, l'échantillon (112) étant déplacé dans l'espace ;
- un procédé de balayage par la pointe, selon lequel, au cours de l'étape d'acquisition d'image, la pointe de sondage (126) et au moins l'un des dispositifs optiques (310, 314) sont déplacés dans l'espace pour la mise en oeuvre du procédé de formation d'image optique, l'échantillon (112) étant de préférence laissé fixe.

4. Procédé selon l'une des deux revendications précédentes dans lequel, des données d'image sont générées pour chaque point et/ou zone, les données d'image comprenant au moins une information de lieu commune du point et/ou de la zone, au moins une information de mesure du procédé de microscopie à force atomique et au moins une information de mesure du procédé de formation d'image optique.

5. Procédé selon les revendications précédentes dans lequel, l'information de lieu commune comporte une information de positionnement d'au moins un système de positionnement pour le positionnement de l'échantillon (112) et/ou le positionnement de la pointe de sondage (126) .

6. Procédé selon l'une des deux revendications précédentes dans lequel, l'information de mesure du procédé de formation d'image optique correspond à un point d'image ou à une pluralité de points d'image, lesquels sont situés dans la zone d'acquisition d'image dans la position de la pointe de sondage (126).

7. Procédé selon l'une quelconque des revendications précédentes dans lequel, au moins une partie d'image étant acquise au moyen du procédé de formation d'image optique au cours de l'étape d'étalonnage, la position de la pointe de sondage (126) dans la partie d'image est identifiée.

8. Procédé selon les revendications précédentes dans lequel, l'identification de la pointe de sondage (126) est réalisée au moins en partie automatiquement, en particulier au moyen d'au moins un procédé de reconnaissance d'image.

9. Procédé selon l'une quelconque des revendications précédentes dans lequel, le procédé de reconnaissance d'image est réalisé par itération au moyen d'au moins une partie d'image respectivement agrandie.

10. Procédé selon l'une des trois revendications précédentes dans lequel, l'identification de la pointe de sondage (126) est réalisée au moins en partie manuellement, en particulier par positionnement manuel d'au moins un élément indicateur, en particulier un curseur, dans la position de la pointe de sondage (126) dans la partie d'image.

11. Procédé selon l'une quelconque des revendications précédentes dans lequel, la synchronisation de l'acquisition des données est réalisée au moyen d'au moins l'un des procédés suivants :
- une commande du procédé de microscopie à force atomique déclenche une acquisition de données du procédé de formation d'image optique et/un éclairage du procédé de formation d'image optique ;
- une commande du procédé de formation d'image optique déclenche une acquisition de données du procédé de microscopie à force atomique ;
- une commande centrale déclenche une acquisition de données du procédé de microscopie à force atomique et du procédé de formation d'image optique.

12. Procédé selon l'une quelconque des revendications précédentes dans lequel, l'étape d'étalonnage est réalisée à plusieurs reprises, afin de contrôler et/ou de corriger l'orientation de la zone d'acquisition d'image par rapport à la position de la pointe de sondage (126).

13. Procédé selon les revendications précédentes dans lequel, au moins une étape d'étalonnage est associée à chaque étape de formation d'image.

14. Procédé selon la revendication 1 dans lequel, le premier dispositif optique (310) et le deuxième dispositif optique (314) utilisent différentes plages de longueur d'onde optiques et/ou différentes techniques d'acquisition optiques, en particulier une technique de lumière de réflexion et une technique de fluorescence.

15. Dispositif (110) de représentation d'au moins un échantillon (112), comprenant au moins un microscope à force atomique (114) pour l'analyse de l'échantillon (112) au moyen d'au moins une pointe de sondage (126), comprenant en outre au moins un premier dispositif optique (310) et au moins un deuxième dispositif optique (314) séparé au moins en partie du premier dispositif optique (310) et servant à analyser l'échantillon (112) au moyen d'au moins un procédé de formation d'image optique, le deuxième dispositif optique (314) étant utilisé pour une étape d'acquisition d'image, comprenant en outre au moins un dispositif d'étalonnage (122), le dispositif d'étalonnage (122) étant conçu pour déterminer au moins une position de la pointe de sondage (126) au moyen du procédé de formation d'image optique à l'aide du premier dispositif optique (310) et pour régler au moins une zone d'acquisition d'image du procédé de formation d'image optique dans une orientation prédéfinie par rapport à la position de la pointe de sondage (126), comprenant en outre au moins une commande d'acquisition d'image (123) pour l'acquisition synchronisée dans l'espace de données au moyen du microscope à force atomique (114) et au moyen du premier dispositif optique (116).

16. Dispositif (110) selon les revendications précédentes dans lequel, le dispositif (110) est conçu pour mettre en oeuvre un procédé selon l'une quelconque des revendications précédentes.

17. Dispositif (110) selon l'une des deux revendications précédentes dans lequel, le microscope à force atomique (114) est conçu pour fonctionner dans au moins l'un des modes de fonctionnement suivants : un mode contact ; un mode non contact ; un mode contact intermittent.

18. Dispositif (110) selon l'une quelconque des revendications de dispositif précédentes dans lequel, le dispositif optique (116) comprend au moins l'un des dispositifs suivants : un microscope, en particulier un microscope confocal, un microscope à balayage laser, un microscope confocal à balayage laser (118), un microscope à fluorescence, un microscope à balayage, un microscope confocal à balayage, un microscope à transmission ; un détecteur, en particulier un détecteur comportant un réseau de détecteurs et/ou une caméra, en particulier une caméra (156 ; 312, 316), une caméra CCD, une caméra EMCCD, un photomultiplicateur, une photodiode, une photodiode rapide.

19. Dispositif (110) selon l'une quelconque des revendications de dispositif précédentes dans lequel, au moins l'un des dispositifs optiques (310, 314) est conçu pour mettre en oeuvre au moins l'un des procédés de formation d'image optique suivants : un procédé de fluorescence, en particulier un procédé de fluorescence induit par une lumière laser ; un procédé d'absorption de plusieurs photons ; un procédé STED ; un procédé PALM ; un procédé RESOLFT ; un procédé PAM.

20. Dispositif (110) selon l'une quelconque des revendications de dispositif précédentes dans lequel, les dispositifs optiques (310, 314) et le microscope à force atomique (114) sont agencés sur les faces opposées de l'échantillon (112).
